(19) Europäisches Patentamt
European Patent Office
Office européen des brevets

(11) **EP 4 503 484 A1**

(12) **EUROPEAN PATENT APPLICATION**
published in accordance with Art. 153(4) EPC

(43) Date of publication:
**05.02.2025 Bulletin 2025/06**

(21) Application number: **23834611.8**

(22) Date of filing: **15.06.2023**

(51) International Patent Classification (IPC):
**H04L 1/00** (2006.01)    **H04W 24/10** (2009.01)

(52) Cooperative Patent Classification (CPC):
**H04L 1/00; H04L 1/06; H04L 5/00; H04W 24/10**

(86) International application number:
**PCT/CN2023/100375**

(87) International publication number:
**WO 2024/007837 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 CN 202210806549**

(71) Applicant: **ZTE Corporation
Shenzhen, Guangdong 518057 (CN)**

(72) Inventors:
• **LU, Zhaohua
Shenzhen, Guangdong 518057 (CN)**
• **XIAO, Huahua
Shenzhen, Guangdong 518057 (CN)**
• **LI, Yong
Shenzhen, Guangdong 518057 (CN)**
• **ZHENG, Guozeng
Shenzhen, Guangdong 518057 (CN)**

(74) Representative: **Aipex B.V.
Vestdijk 51
5611 CA Eindhoven (NL)**

(54) **INFORMATION TRANSMISSION METHOD AND DEVICE, AND STORAGE MEDIUM**

(57)    Provided are an information transmission method and device, and a storage medium. The information transmission method applied to a first communication node includes: determining priority values of L channel state information (CSI) reports, where the L CSI reports include L1 first-type CSI reports and L2 second-type CSI reports, L, L1 and L2 are all integers, L1 is greater than or equal to 0, L2 is greater than 0, and L = L1 + L2; and transmitting information in at least one CSI report among the L CSI reports according to the priority values.

**FIG. 1**

Determine priority values of L CSI reports — S110

Transmit information in at least one CSI report among the L CSI reports according to the priority values — S120

EP 4 503 484 A1

**Description**

This application claims priority to Chinese Patent Application No. 202210806549.4 filed with the China National Intellectual Property Administration (CNIPA) on Jul. 08, 2022, the disclosure of which is incorporated herein by reference in its entirety.

TECHNICAL FIELD

The present application relates to the field of communications, for example, an information transmission method and device, and a storage medium.

BACKGROUND

The introduction of artificial intelligence (AI)/machine learning (ML) into a wireless communication system can improve the performance of the wireless communication system. One of the application scenarios is AI-based channel state information (CSI) feedback. For example, one AI-based CSI feedback is implemented through an autoencoder. The autoencoder includes an encoder and a decoder, the encoder is located at a terminal, and the decoder is located at a base station side. The transmission of CSI is implemented through the autoencoder.

The terminal needs to quantize the CSI when feeding the CSI back. For example, the CSI to be fed back includes L elements, each element is quantized using K bits, and the quantized CSI is transmitted over the uplink transmission resource indicated by a CSI report to be fed back to the base station, where L and K are positive integers. In some scenarios, when the size of the uplink transmission resource used for transmitting the CSI is insufficient for transmitting the CSI, a drop operation may be performed to transmit only part of the CSI. However, in some scenarios, such as AI-based CSI feedback, since each element of the CSI may correspond to each element in the initial channel information, the manner of directly dropping part of the elements of the CSI is not reasonable. Therefore, how to transmit the CSI in such scenarios is an urgent problem to be solved.

SUMMARY

Embodiments of the present application provide an information transmission method and device, and a storage medium, thereby effectively transmitting the CSIs corresponding to CSI reports in the case of a transmission resource collision.

The embodiments of the present application provide an information transmission method. The information transmission method is applied to a first communication node and includes the following.

Priority values (PVs) of L CSI reports are determined, where the L CSI reports include L1 first-type CSI reports and L2 second-type CSI reports, L, L1 and L2 are all integers, L1 is greater than or equal to 0, L2 is greater than 0, and L = L1 + L2.

Information in at least one CSI report among the L CSI reports is transmitted according to the PVs.

The embodiments of the present application provide an information transmission method. The information transmission method is applied to a second communication node and includes the following.

Information in at least one CSI report sent by a first communication node is received, where the CSI report includes at least one second-type CSI report.

First channel information is obtained according to the information in the CSI report.

The embodiments of the present application provide an information transmission device. The information transmission device includes a memory and one or more processors.

The memory is configured to store one or more programs.

The one or more programs, when executed by the one or more processors, cause the one or more processors to implement the method in any embodiment described above.

The embodiments of the present application provide a storage medium. The storage medium is configured to store a computer program, where the computer program, when executed by a processor, causes the processor to implement the method in any embodiment described above.

BRIEF DESCRIPTION OF DRAWINGS

FIG. 1 is a flowchart of an information transmission method according to an embodiment of the present application;

FIG. 2 is a flowchart of another information transmission method according to an embodiment of the present application;

FIG. 3 is a block diagram of an information transmission apparatus according to an embodiment of the present application;

FIG. 4 is block diagram of another information transmission apparatus according to an embodiment of the present application; and

FIG. 5 is a structure diagram of an information transmission device according to an embodiment of the present application.

DETAILED DESCRIPTION

Embodiments of the present application are described below in conjunction with drawings. The present application will be described in conjunction with the drawings of embodiments, and the embodiments described hereinafter are intended to explain the present application and not to limit the scope of the present application.

For ease of understanding of the schemes of the present application, the concepts involved in the present application are construed below.

In the embodiments of the present application, the network architecture of a mobile communication network (including, but not limited to, a 3rd-generation mobile communication technology (3G), the 4th-generation mobile communication technology (4G), the 5th-generation mobile communication technology (5G), and a future mobile communication network) may include a network-side device (for example, including, but not limited to, a base station) and a terminal-side device (for example, including, but not limited to, a terminal). It is to be understood that in one example, a first communication node (which may also be referred to as a first communication node device) in the downlink may be a base station-side device, and a second communication node (which may also be referred to as a second communication node device) may be a terminal-side device. Of course, a first communication node in the uplink may be a terminal-side device, and a second communication node may be a base station-side device. When the two communication nodes are in device-to-device communication, the first communication node and the second communication node may each be a base station or a terminal.

In the embodiments of the present application, the base station may be a base station or an Evolved Node B (eNB or eNodeB) in Long-Term Evolution (LTE) or Long Term Evolution-advanced (LTEA), a base station device in a 5G network, a base station in a future communication system, or the like. The base station may include a variety of network-side devices such as macro base stations, micro base stations, home base stations, radio remote, reconfigurable intelligent surface (RIS) routers, wireless fidelity (Wi-Fi) devices, primary cells and secondary cells.

In the embodiments of the present application, the terminal is a device having a wireless transceiving function. The terminal may be deployed on land, including an indoor device, an outdoor device, a hand-held device, a wearable device and a vehicle-mounted device. The terminal may also be deployed on the water (for example, on a ship). The terminal may also be deployed in the air (for example, on an airplane, a balloon and a satellite). The terminal may be a mobile phone, a portable android device (Pad), a computer having a wireless transceiving function, a virtual reality (VR) terminal, an augmented reality (AR) terminal, a wireless terminal in industrial control, a wireless terminal in self-driving, a wireless terminal in telemedicine, a wireless terminal in a smart grid, a wireless terminal in transportation safety, a wireless terminal in a smart city and a wireless terminal in smart home. The application scenarios are not limited in the embodiments of the present application. The terminal may also sometimes be referred to as a user, a user equipment (UE), an access terminal, a UE unit, a UE station, a mobile station, a mobile platform, a remote station, a remote terminal, a mobile device, a UE terminal, a wireless communication device, a UE agent or a UE apparatus, which is not limited in the embodiments of the present application.

In some embodiments, the higher-layer signaling includes, but is not limited to, radio resource control (RRC) and a media access control control element (MAC CE). A physical-layer signaling may further be transmitted between the base station and the terminal. For example, a physical-layer signaling is transmitted over a physical downlink control channel (PDCCH), or a physical-layer signaling is transmitted over a physical uplink control channel (PUCCH).

In some embodiments, the indicator of various parameters may also be referred to as an index or an identifier (ID), and the three are completely equivalent concepts. For example, a wireless system resource identifier is an index corresponding to the wireless system resource herein includes, but is not limited to, one of the following: a reference signal resource, a reference signal resource group, a reference signal resource configuration, a CSI report, a CSI report set, a terminal, a base station, a panel, a neural network, a sub-neural network and a neural network layer. The base station may indicate the identifier of one resource or the identifier of a group of resources to the terminal through various higher-layer signaling or physical-layer signaling.

In some embodiments, AI includes devices, components, software and modules having a self-learning function such as machine learning (ML), deep learning, reinforcement learning, transfer learning, deep reinforcement learning, and meta learning. In some embodiments, AI is implemented through an AI network (referred to as a neural network), and the neural network includes multiple layers, each of which includes at least one node. In one example, the neural network includes an input layer, an output layer, and at least one hidden layer, where each layer of the neural network includes, but is not limited to, at least one of a fully connected layer, a dense layer, a convolution layer, a transposed convolution layer, a directly connected layer, an activation function, a normalization layer, a pooling layer, and the like. In some embodiments, each layer of the neural network may include one sub-neural network, such as a residual network block (ResNet block), a dense network block (DenseNet block), and a recurrent neural network (RNN). The AI network includes a neural network model and/or a neural network parameter corresponding to neural network model, where the neural network model may be referred to as a network model and the neural network parameter may be referred to as a network parameter. One network model defines the number of layers of the neural network, the size of each layer, an activation function, a link situation, the size of a convolution kernel, a convolution stride, the type of convolution (for example, one-dimensional (1D) convolution, two-dimensional (2D) convolution, three-dimensional (3D) convolution, atrous convolution, transposed convolution, separable convolution, group convolution, dilated convolution, and the like) and other network architectures, and the network parameter is the weights and/or biases of layers of networks in the network model and the values thereof. One network model may correspond to multiple different sets of neural network parameter values to accommodate different scenarios. One neural network model may correspond to multiple different neural network parameter values. The neural network parameter is obtained by means of online training or offline training. For example, the neural network model is trained by inputting at least one sample and label to obtain the neural network parameter.

In some embodiments, the slot may be a slot or a mini slot. One slot or one mini slot includes at least one symbol. The symbol herein refers to a time unit in one subframe, one frame or one slot. For example, the symbol may be an orthogonal frequency-division multiplexing (OFDM) symbol, a single-carrier frequency-division multiple access (SC-FDMA) symbol or an orthogonal frequency-division multiple access (OFDMA) symbol.

In some embodiments, transmission includes sending or receiving, for example, sending data or a signal or receiving data or a signal.

In some embodiments, to calculate the CSI or perform channel estimation, mobility management or positioning, the base station or the user needs to send a reference signal (RS). The reference signal includes, but is not limited to, a channel-state information reference signal (CSI-RS) which includes a zero power CSI-RS (ZP CSI-RS) and a non-zero power CSI-RS (NZP CSI-RS), a channel-state information-interference measurement (CSI-IM) signal, a sounding reference signal (SRS), a synchronization signal block (SSB), a physical broadcast channel (PBCH) and a synchronization signal block/physical broadcast channel (SSB/PBCH), where the NZP CSI-RS may be used for measuring a channel or interference, the CSI-RS may also be used for tracking and thus is also called a CSI-RS for tracking (TRS), the CSI-IM is generally used for measuring interference, and the SRS is used for channel estimation. In addition, the set of resource elements (REs) used for transmitting the reference signal is referred to as a reference signal resource, such as a CSI-RS resource, an SRS resource, a CSI-IM resource and an SSB resource. In the present application, the SSB includes a synchronization signal block and/or a physical broadcast channel.

In some embodiments, in a communication system, the resource for transmitting the reference signal may be referred to as a reference signal resource. To save the signaling overhead, multiple reference signal resources may be divided into multiple sets (such as a CSI-RS resource set, a CSI-IM resource set and an SRS resource set). The reference signal resource set includes at least one reference signal resource. The multiple reference signal resource sets may have the same reference signal resource setting (for example, a CSI-RS resource setting, an SRS resource setting or a CSI-IM resource setting, where the CSI-RS resource setting and the CSI-IM resource setting may be combined and collectively referred to as the CSI-RS resource setting) to configure parameter information.

In some embodiments, the base station configures measurement resource information, and the measurement resource information is used for acquiring the CSI. The measurement resource information includes $C_N$ pieces of channel measurement resource (CMR) information and $C_M$ pieces of interference measurement resource (IMR) information, where $C_N$ and $C_M$ are positive integers. The base station configures the measurement resource information in one report configuration (report config) or one reporting setting.

In some examples, to better transmit the data or the signal, the base station or the terminal needs to acquire the CSI. The CSI may include at least one of: a CSI-RS resource indicator (CRI), a synchronization signal block resource indicator (SSBRI), reference signal received power (RSRP), a differential RSRP, a channel quality indicator (CQI), a precoding matrix indicator (PMI), a layer indicator (LI), a rank indicator (RI), a Level 1 signal-to-interference-plus-noise ratio (L1-SINR) or a differential L1-SINR. The PMI is one of precoding information, that is, the case in which the precoding information is implemented based on a codebook. The precoding information also includes an implementation manner based on a non-codebook, such as second-type precoding information. In one example, the CSI including first-type precoding information is referred to as a first-type CSI. In one example, the CSI including second-type precoding information is referred to as a second-type CSI.

In some embodiments, the terminal and the base station transmit, through the first-type precoding information, a CSI that matches a channel, and the first-type precoding information is precoding information that is formed based on a conventional channel feature matrix or a quantization value of a feature matrix. For example, the first-type precoding information is formed in a manner based on a codebook, and the codebook is, for example, a codebook of N antennas in LTE, where N = 2, 4, 8, 12, 16, 24 or 32, or a Type I codebook, a Type II codebook, a Type II port selection codebook, an enhanced Type II codebook, an enhanced Type II selection codebook or a further enhanced Type II selection codebook in New Radio (NR). The codebook herein includes L codewords, the idea of which is that the base station and the terminal pre-store L codewords according to a specified formula, a specified table or a specified dictionary. In some examples, the codeword is one vector. In some examples, the codeword is a matrix, and the matrix includes r columns, each of which is also one vector. In some examples, the columns of the matrix are orthogonal to each other. In some examples, the vector constituting the codeword is a 0-1 vector, where the entire vector has only one value of 1, and the other values are 0. In some examples, the vector constituting the codeword is a discrete Fourier transform (DFT) vector. In some examples, the vector constituting the codeword is obtained through the tensor product (Kronecker product) of two or more DFT vectors. In some examples, the vector constituting the codeword is obtained by connecting two or more DFT vectors multiplied by different phase rotation factors. In some examples, the vector constituting the codeword is obtained by multiplying the tensor product (Kronecker product) of two or more DFT vectors by a phase rotation factor. The base station or the terminal, by looking up the L codewords, finds the codeword that best matches the channel as the optimal codeword to transmit the data or the signal. The codeword that best matches the channel herein includes, but is not limited to, at least one of the following: the codeword whose distance from the channel is the shortest, the codeword whose correlation with the channel is the highest, the codeword whose distance from the optimal right singular vector or matrix of the channel is the shortest, the codeword whose correlation with the optimal right singular vector or matrix of the channel is the highest, or the codeword whose signal-to-noise ratio computed with the channel is the largest. L is an integer greater than 1 and is generally greater than the number of transmitting antennas.

In some examples, the terminal and the base station transmit the CSI that best matches the channel through the second-type precoding information, and the second-type precoding information is a CSI obtained based on AI. In one example, the base station and the terminal obtain the CSI through an encoder in an autoencoder, the autoencoder includes an encoder and a decoder, the encoder is located at the terminal, and the decoder is located at the base station side. The terminal compresses obtained CSI H through the encoder to obtain a compressed CSI H1, quantizes the compressed CSI H1, and feeds the quantized CSI H1 back to the base station. The base station receives the quantized CSI H1, de-quantizes the CSI H1, and inputs the de-quantized CSI H1 into the decoder. The decoder decompresses the de-quantized CSI H1 to restore the value H' of H as far as possible. In one example, H includes K0 elements. The terminal selects K elements from H as H1, quantizes H1, and feeds the quantized H1 back. The base station receives the K quantized elements, de-quantizes the K quantized elements, and inputs the de-quantized K elements into an AI module. The AI module outputs K0 elements as the restoration of H to obtain a precoding matrix of H. K and K0 herein are integers greater than 1, and K < K0. H1 compressed by the compressor and the K elements selected from H herein are both the second-type CSI. For simplicity, the quantized H1 is also referred to as the second-type CSI. In one example, the second-type precoding information may also be a precoding matrix that is generated in another non-AI manner and that is different from the first-type precoding information. In one example, the second-type precoding information may also be a precoding matrix other than the first-type precoding information.

In some examples, to transmit the CSI, for example, the terminal feeds the CSI back, and the base station receives the CSI. It is to be noted that the terminal and the base station define one CSI report (or one CSI report congfig), where the CSI report defines at least one of the following parameters: a time-frequency resource for feeding the CSI back, reportQuantity included in the CSI, a time domain type reportConfigType fed back by the CSI, a measurement channel resource, a measurement interference resource, or a measured bandwidth size. The CSI report may be transmitted over an uplink transmission resource, where the uplink transmission resource includes a physical uplink shared channel (PUSCH) and a PUCCH. The CSI report also has a time-domain characteristic and includes a periodic CSI report (P-CSI report), an aperiodic CSI report (AP-CSI report) and a semi-persistent CSI report (SP-CSI report). Generally, the P-CSI transmits a small number of bits and is transmitted over the PUCCH; the A-CSI transmits a large number of bits and is generally transmitted over the PUSCH; the SP-CSI may be transmitted over the PUSCH or may be transmitted over the PUCCH. The P-CSI transmitted based on the PUCCH is generally configured through a higher-layer signaling (for example, an RRC); the SP-CSI transmitted over the PUCCH is also configured or activated through a higher-layer signaling (for example, an RRC and/or an MAC CE); the SP-CSI or the A-CSI transmitted based on the PUSCH is triggered through a physical-layer signaling (for example, downlink control information (DCI)), where the DCI is generally transmitted over a PDCCH.

In some examples, the base station configures, through the higher-layer signaling and/or the physical-layer signaling, N CSI reports that need to be fed back to the base station for the terminal. Each CSI report has an identity (ID) and thus is referred to as a CSI reportID. The terminal may select M CSI reports from the N CSI reports according to the calculation capability or the processing capability of the terminal and the requirement of the base station and feed at least one CSI report among the M CSI reports back according to the resource fed back in the uplink, where N and M are positive integers and M ≤ N. In one example, M CSI reports need to be fed back, but the feedback resources corresponding to at least two reports among the M reports collide. The feedback resource collision of the two reports means that the transmission resources (for example, PUCCHs or PUSCHs) used for feeding the two reports back respectively have at least one same symbol and/or at least one same subcarrier.

In some examples, the terminal needs to feed multiple CSI reports back, where the transmission resources corresponding to at least L CSI reports among the multiple CSI reports collide. In one example, at least one of the L colliding CSI reports is a report including the second-type precoding information, where L is a positive integer. The PVs of the L colliding CSI reports are calculated according to a priority calculation formula, and according to the PVs sorted in ascending order, at least one CSI report with a small priority is selected and then transmitted over an uplink transmission resource.

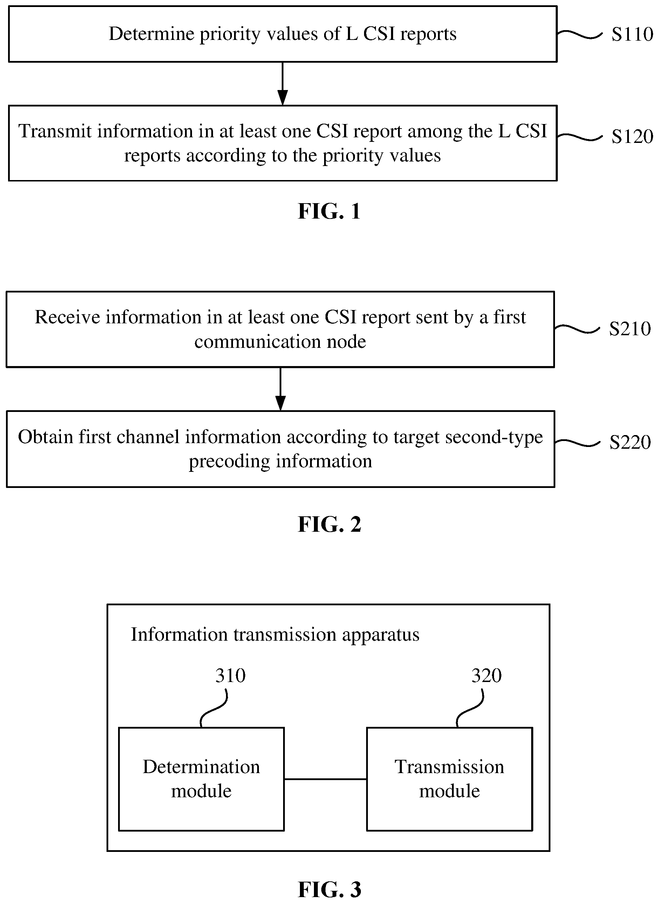

In an embodiment, FIG. 1 is a flowchart of an information transmission method according to an embodiment of the present application. This embodiment may be executed by an information transmission device. The information transmission device may be a terminal (for example, a UE). As shown in FIG. 1, this embodiment includes S110 and S 120.

In S 110, PVs of L CSI reports are determined.

The L CSI reports include L1 first-type CSI reports and L2 second-type CSI reports, L, L1 and L2 are all integers, L1 is greater than or equal to 0, L2 is greater than 0, and L = L1 + L2.

In this embodiment, the L CSI reports herein are multiple CSI reports which collide over the transmission resource. The first-type CSI report refers to a CSI report that includes first-type precoding information, and the second-type CSI report refers to a CSI report that includes second-type precoding information. The first-type precoding information a CSI fed back based on a conventional codebook which is, for example, a codebook in LTE, a Type I codebook, a Type II codebook, a Type II port selection codebook, an enhanced Type II codebook, an enhanced Type II selection codebook or a further enhanced Type II selection codebook in NR, or a multi-panel codebook. The second-type precoding information is a CSI fed back based on AI. For example, the CSI is compressed by an encoder, and the base station decompresses the compressed CSI to restore the CSI.

In S 120, information in at least one CSI report among the L CSI reports is transmitted according to the PVs.

In this embodiment, the first communication node determines the PVs of L CSI reports according to a PV calculation formula, sorts the PVs in ascending order, selects at least one CSI report with the smallest PV, and transmits the selected CSI report to a second communication node, thereby ensuring that the second communication node can effectively acquire the CSI. In this embodiment, all or part of the information in at least one CSI report among the L CSI reports may be transmitted according to the PVs. In one example, if the total transmission bits corresponding to the L CSI reports can be transmitted over an uplink transmission resource, the first communication node transmits all of the information in at least one CSI report among the L CSI reports. In one example, if the total transmission bits corresponding to the L CSI reports cannot be transmitted over an uplink transmission resource, the first communication node transmits part of the information in at least one CSI report among the L CSI reports.

In one example, C CSI reports with the smallest PV are selected and transmitted over the uplink transmission resource corresponding to the CSI reports, where C is a positive integer less than or equal to L and is the maximum number of CSI reports that meet the transmission requirement of the uplink transmission. Meeting the transmission requirement of the uplink transmission herein means that the total number of bits of the CSI transmitted by the C CSI reports is less than or equal to the number of bits that can be transmitted over the uplink transmission resource. One method is as follows: whether the total transmission bits corresponding to the L CSI reports can be transmitted over the uplink transmission resource is determined; if the total transmission bits corresponding to the L CSI reports cannot be transmitted over the uplink transmission resource, the CSI report with the largest PV is ignored, and whether the total transmission bits corresponding to the remaining (L - 1) CSI reports can be transmitted over the uplink transmission resource is determined; if the total transmission bits corresponding to the remaining (L - 1) CSI reports cannot be transmitted over the uplink transmission resource, the CSI report with the second largest PV is ignored; if the transmission requirement is not met, the CSI report with the third largest PV is sequentially ignored, and so on, until the transmission requirement is met.

In an embodiment, the operation in which the PVs of the L CSI reports are determined includes: the PVs of the L CSI reports are determined according to at least one of a first initial parameter, a second initial parameter, a third initial parameter or a fourth initial parameter.

In this embodiment, the first initial parameter, the second initial parameter, the third initial parameter and the fourth initial parameter are all constant parameters in the PV calculation formula, and the four parameters are non-negative integers. In this embodiment, at least one of the first initial parameter, the second initial parameter, the third initial parameter or the fourth initial parameter is re-configured so that the value and the meaning corresponding to the first initial parameter, the second initial parameter, the third initial parameter or the fourth initial parameter become different, so as to extend to the scenario that includes the second-type CSI report, thereby obtaining different PVs of the L CSI reports.

In an embodiment, the value of the first initial parameter is a non-negative integer less than or equal to 7, and the meaning corresponding to the value includes at least one of the following: the value of the first initial parameter being less than or equal to 3 indicates that the value corresponds to a first-type CSI report; the first initial parameter is greater than 3 indicates that the value corresponds to a second-type CSI report. In this embodiment, in the case where the first initial parameter is less than or equal to 3, the meaning corresponding to the value of the first initial parameter may include one of the following: an aperiodic first-type CSI report carried over a first channel, a semi-persistent first-type CSI report carried over a first channel, a semi-persistent first-type CSI report carried over a second channel or a periodic first-type CSI report carried over a second channel; in the case where the first initial parameter is greater than 3, the meaning corresponding to the value of the first initial parameter may include one of the following: an aperiodic second-type CSI report carried over a first channel, a semi-persistent second-type CSI report carried over a first channel, a semi-persistent second-type CSI report carried over a second channel or a periodic second-type CSI report carried over a second channel. For example, the first channel refers to a PUSCH, and the second channel refers to a PUCCH.

In an embodiment, in the case where the first initial parameter corresponds to different values, the meanings corresponding to the first initial parameter are also different. For example, the first initial parameter being 0 may indicate an aperiodic first-type CSI report carried over the first channel; the first initial parameter being 1 may indicate a semi-persistent first-type CSI report carried over the first channel; the first initial parameter being 2 may indicate a semi-persistent first-type CSI report carried over the second channel; the first initial parameter being 3 may indicate a periodic first-type CSI report carried over the second channel; the first initial parameter being 4 may indicate an aperiodic second-type CSI report carried over the first channel; the first initial parameter being 5 may indicate a semi-persistent second-type CSI report carried over the first channel; the first initial parameter being 6 may indicate a semi-persistent second-type CSI report carried over the second channel; the first initial parameter being 7 may indicate a periodic second-type CSI report carried over the second channel. In this embodiment, the larger the value of the first initial parameter, the larger the PV of the corresponding CSI report, and in this manner, the CSI report with the largest PV is dropped. It is to be understood that in the case where the transmission resources corresponding to the first-type CSI report and the second-type CSI report collide, the second-type CSI report is preferentially dropped.

In an embodiment, the value of the second initial parameter is a non-negative integer less than or equal to 2, and the meaning corresponding to the value includes at least one of the following: the value of the second initial parameter being less than or equal to 1 indicates that the value corresponds to a first-type CSI report; the value of the second initial parameter being greater than 1 indicates that the value corresponds to a second-type CSI report. In this embodiment, in the case where the second initial parameter is less than or equal to 1, the meaning of the value of the second initial parameter includes one of the following: a CSI report carrying Level 1 reference signal received power (L1-RSRP) or an L1-SINR, or a first-type CSI report not carrying an L1-RSRP or an L1-SINR; in the case where the second initial parameter is greater than 1, the meaning of the value of the second initial parameter includes a second-type CSI report not carrying an L1-RSRP or an L1-SINR.

In this embodiment, the value of the second initial parameter may include 0, 1 and 2. In the case where the second initial parameter corresponds to different values, the meanings corresponding to the second initial parameter are also different. For example, the value of the second initial parameter being 0 may indicate a CSI report carrying an L1-RSRP or an L1-SINR; the value of the second initial parameter being 1 may indicate a first-type CSI report not carrying an L1-RSRP or an L1-SINR; the value of the second initial parameter being 2 may indicate a second-type CSI report not carrying an L1-RSRP or an L1-SINR. The CSI report carrying an L1-RSRP or an L1-SINR may include a first-type CSI report carrying an L1-RSRP or an L1-SINR, may include a second-type CSI report carrying an L1-RSRP or an L1-SINR, or may include a first-type CSI report carrying an L1-RSRP or an L1-SINR and a second-type CSI report carrying an L1-RSRP or an L1-SINR.

In an embodiment, the value of the third initial parameter is a non-negative integer less than $2N_{cell}$, and the meaning corresponding to the value includes one of the following: the value of the third initial parameter being less than $N_{cell}$ indicates that the value corresponds to a first-type CSI report; the value of the third initial parameter being greater than or equal to $N_{cell}$ indicates that the value corresponds to a second-type CSI report, where $N_{cell}$ represents the maximum number of serving cells. In this embodiment, $N_{cell}$ represents the maximum number of serving cells configured by the higher layer. In the case where the value of the third initial parameter is 0, 1, 2, ..., $N_{cell}$ - 1, the third initial parameter indicates that the first communication node feeds a first-type CSI report back; in the case where the value of the third initial parameter is $N_{cell}$, $N_{cell}$ + 1, $N_{cell}$ + 2, ..., $2N_{cell}$ - 1, the third initial parameter indicates that the first communication node feeds a second-type CSI report back.

In an embodiment, the value of the fourth initial parameter is a non-negative integer less than $2M_s$, and the meaning corresponding to the value includes one of the following: the value of the fourth initial parameter being less than $M_s$ indicates that the value corresponds to a first-type CSI report; the value of the fourth initial parameter being greater than or equal to $M_s$ indicates that the value corresponds to a second-type CSI report, where $2M_s$ represents the maximum number of reports. In this embodiment, $2M_s$ represents the maximum number of reports configured by the higher layer. The maximum number of reports refers to the maximum number of CSI reports that can be fed back from the first communication node to the second communication node. the value of the fourth initial parameter being 0, 1, 2, ..., $M_s$ - 1 indicates that the first communication node feeds a first-type CSI report back; the value of the fourth initial parameter

being $M_s$, $M_s + 1$, ..., $2M_s - 1$ indicates that the first communication node feeds a second-type CSI report back.

It is to be noted that the embodiment where the PVs of the L CSI reports are determined according to at least one of the first initial parameter, the second initial parameter, the third initial parameter or the fourth initial parameter is implemented in the case where it is specified that the PV of the second-type CSI report is greater than the PV of the first-type CSI report. Of course, the design in which the PV of the second-type CSI report is less than the PV of the first-type CSI report is not ruled out. In this case, there are the following cases. In an embodiment, the value of the first initial parameter is a non-negative integer less than or equal to 7, and the meaning corresponding to the value includes at least one of the following: the value of the first initial parameter being less than or equal to 3 indicates that the value corresponds to the second-type CSI report; the value of the first initial parameter being greater than 3 indicates that the value corresponds to the first-type CSI report. In an embodiment, the value of the second initial parameter is a non-negative integer less than or equal to 2, and the meaning corresponding to the value includes at least one of the following: the value of the second initial parameter being less than or equal to 1 indicates that the value corresponds to the second-type CSI report; the value of the second initial parameter being greater than 1 indicates that the value corresponds to the first-type CSI report. In an embodiment, the value of the third initial parameter is a non-negative integer less than $2N_{cell}$, and the meaning corresponding to the value includes one of the following: the value of the third initial parameter being less than $N_{cell}$ indicates that the value corresponds to the second-type CSI report; the value of the third initial parameter being greater than or equal to $N_{cell}$ indicates that the value corresponds to the first-type CSI report, where $N_{cell}$ represents the maximum number of serving cells. In an embodiment, the value of the fourth initial parameter is a non-negative integer less than $2M_s$, and the meaning corresponding to the value includes one of the following: the value of the fourth initial parameter being less than $M_s$ indicates that the value corresponds to the second-type CSI report; the value of the fourth initial parameter being greater than or equal to $M_s$ indicates that the value corresponds to the first-type CSI report, where $2M_s$ represents the maximum number of reports.

In some embodiments, the smaller the PV, the higher the priority of the CSI report corresponding to the PV When two CSI reports collide and only one of the CSI reports can be transmitted, the CSI report with a higher priority or the CSI report with a smaller PV is preferentially transmitted, and the CSI report with a lower priority or the CSI report with a larger PV is dropped and not transmitted.

In an embodiment, the operation in which the PVs of the L CSI reports are determined includes:
the PVs of the L CSI reports are determined according to at least one of a first target parameter, a second target parameter, a third target parameter or a fourth target parameter.

In an embodiment, the first target parameter is determined according to a first initial parameter and a first preset offset, where the first initial parameter is a non-negative integer less than or equal to 3, and the value of the first preset offset is 0 or a positive integer greater than or equal to 4. In one specific example, when the value of the first preset offset is 0, the first preset offset corresponds to the first-type CSI report, and when the value of the first preset offset is 4, the first preset offset corresponds to the second-type CSI report. In another specific example, when the value of the first preset offset is 0, the first preset offset corresponds to the second-type CSI report, and when the value of the first preset offset is 4, the first preset offset corresponds to the first-type CSI report. It is to be noted that the first preset offset may also be another specific integer greater than 4 to indicate that the first preset offset corresponds to the second-type CSI report. In an embodiment, the second target parameter is determined according to a second initial parameter and a second preset offset, where the second initial parameter is a non-negative integer less than or equal to 1, and the value of the second preset offset is 0 or a positive integer greater than or equal to 2. In one specific example, when the value of the second preset offset is 0, the second preset offset corresponds to the first-type CSI report, and when the value of the second preset offset is 2, the second preset offset corresponds to the second-type CSI report. In another specific example, in an embodiment, when the value of the second preset offset is 0, the second preset offset corresponds to the second-type CSI report, and when the value of the second preset offset is 2, the second preset offset corresponds to the first-type CSI report. It is to be noted that the second preset offset may also be another specific integer greater than 2 to indicate that the second preset offset corresponds to the second-type CSI report. In an embodiment, the third target parameter is determined according to a third initial parameter and a third preset offset, where the third initial parameter is a non-negative integer less than or equal to the maximum number $N_{cell}$ of serving cells, and the value of the third preset offset is 0 or a positive integer greater than or equal to $N_{cell}$. In one specific example, when the value of the third preset offset is 0, the third preset offset corresponds to the first-type CSI report, and when the value of the third preset offset is $N_{cell}$, the third preset offset corresponds to the second-type CSI report. In another specific example, in an embodiment, when the value of the third preset offset is 0, the third preset offset corresponds to the second-type CSI report, and when the value of the third preset offset is $N_{cell}$, the third preset offset corresponds to the first-type CSI report. It is to be noted that the third preset offset may also be another specific integer greater than $N_{cell}$ to indicate that the third preset offset corresponds to the second-type CSI report. In an embodiment, the fourth target parameter is determined according to a fourth initial parameter and a fourth preset offset, where the fourth initial parameter is a non-negative integer less than or equal to the maximum number $M_s$ of CSI reports, and the value of the fourth preset offset is 0 or a positive integer greater than or equal to $M_s$. In one specific example, when the value of the fourth preset offset is 0, the fourth preset offset corresponds to the first-type CSI report, and when the value of the fourth preset

offset is $M_s$, the fourth preset offset corresponds to the second-type CSI report. In another specific example, when the value of the fourth preset offset is 0, the fourth preset offset corresponds to the second-type CSI report, and when the value of the fourth preset offset is $M_s$, the fourth preset offset corresponds to the first-type CSI report. It is to be noted that the fourth preset offset may also be another specific integer greater than $M_s$ to indicate that the fourth preset offset corresponds to the second-type CSI report.

In this embodiment, the PV of the second-type CSI report may be determined through an offset. Correspondingly, each initial parameter is configured with one corresponding preset offset, that is, the offset corresponding to the first initial parameter is the first preset offset, the offset corresponding to the second initial parameter is the second preset offset, the offset corresponding to the third initial parameter is the third preset offset, and the offset corresponding to the fourth initial parameter is the fourth preset offset. In this embodiment, the first target parameter is the sum of the first initial parameter and the first preset offset; the second target parameter is the sum of the second initial parameter and the second preset offset; the third target parameter is the sum of the third initial parameter and the third preset offset; the fourth target parameter is the sum of the fourth initial parameter and the fourth preset offset.

In some embodiments, the information in at least one CSI report among the L CSI reports is transmitted according to the PVs, for example, C CSI reports with the smallest PVs among the L CSI reports are selected according to the PVs, the CSI corresponding to each CSI report in the C selected CSI reports is coded according to a configured modulation and coding scheme to form the information of the C CSI reports, and the information of the C CSI reports is transmitted through the transmission recourse to the base station. The base station receives the information of the C CSI reports over the transmission resource and decodes the received information to obtain the CSI corresponding to the C CSI reports. C is greater than or equal to 1 and less than or equal to L.

In these embodiments, the transmission resource is just capable of transmitting the information in the C CSI reports. In other embodiments, C CSI reports with the smallest PV among the L CSI reports are selected according to the PVs. However, the transmission resource can only efficiently transmit the information of (C - 1) CSI reports, and the number of bits that the transmission resource can be efficiently transmitted minus the total number of bits of the CSIs corresponding to the (C - 1) CSI reports with the smallest PV is the size of the remaining transmission resource (or called the remaining size of the transmission resource or the remaining bits of the transmission resource). The remaining bits of the transmission resource are not sufficient to transmit the information of the C-th CSI report. The following embodiments or examples are mainly used to illustrate that the remaining bits of the transmission resource are not sufficient to transmit all the information in the C-th CSI report. The C-th CSI report is the second-type precoding information. C herein is an integer greater than or equal to 1 and less than or equal to L.

In some embodiments, the information in at least one CSI report among the L CSI reports is transmitted according to the PVs, where the information in at least one CSI report is the information in the C CSI reports, and the remaining bits of the transmission resource are not capable of efficiently transmitting all of the information in the C-th CSI report. The C-th CSI report is a second-type CSI report, and information of the second-type CSI report includes the second-type precoding information. Since the remaining bits of the transmission resource are not capable of efficiently transmitting the second-type precoding information, the second-type precoding information needs to be processed into new second-type precoding information according to a preset rule so that the new second-type precoding information can be efficiently transmitted through the remaining bits of the transmission resource. For illustrative purposes, the original second-type precoding information before processed according to the preset rule is referred to as the initial second-type precoding information, and the new second-type precoding information after processed according to the preset rule is referred to as the target second-type precoding information. The initial second-type precoding information and the target second-type precoding information herein are both second-type precoding information. Generally, the number of elements corresponding to the target second-type precoding information being less than or equal to the number of elements corresponding to the initial second-type precoding information. In some examples, the information in the CSI report may include the first-type precoding information or may include the second-type precoding information. In some examples, the information in the CSI report includes the initial second-type precoding information or the quantized initial second-type precoding information, where the quantization bit used for quantizing the initial second-type precoding information is an original element quantization bit. In some examples, the information in the CSI report includes the second-type precoding information that is determined according to the preset rule and the initial second-type precoding information or the quantized target second-type precoding information, where the quantization bit used for quantizing the target second-type precoding information is a target element quantization bit. In some examples, the total number of bits of the target second-type precoding information after quantization being less than the total number of bits of the initial second-type precoding information after quantization. In some examples, the target second-type precoding information after quantization is also referred to as the target second-type precoding information, which needs to be determined in context. In some examples, the initial second-type precoding information after quantization is also referred to as the initial second-type precoding information, which needs to be determined in context. In some examples, the second-type precoding information after quantization is also referred to as the second-type precoding information, which needs to be determined in context.

In an embodiment, the information in the at least one CSI report includes initial second-type precoding information; and the operation in which the information in at least one CSI report among the L CSI reports is transmitted according to the PVs includes: target second-type precoding information is determined according to a preset rule and the initial second-type precoding information. In some embodiments, the at least one CSI report may refer to C CSI reports, where C equal to 1, and the information in the CSI report is the initial second-type precoding information. Since the transmission resource cannot efficiently transmit the initial second-type precoding information, the initial second-type precoding information needs to be processed into target second-type precoding information according to the preset rule, where the transmission resource can efficiently transmit the target second-type precoding information. The target second-type precoding information is transmitted over the transmission resource. In some embodiments, the at least one CSI report may refer to C CSI reports, where C > 1 and the information in the C-th CSI report among the C CSI reports is the initial second-type precoding information. Since the remaining bits of the transmission resource cannot efficiently transmit the initial second-type precoding information, the initial second-type precoding information needs to be processed into target second-type precoding information according to the preset rule, where the remaining bits of the transmission resource can efficiently transmit the target second-type precoding information. The information in the (C - 1) CSI reports and the target second-type precoding information included in the C-th CSI report are coded into the information in the C CSI reports. The transmission resource transmits the information in the C CSI reports, where the information in the C CSI reports includes the target second-type precoding information.

In an embodiment, the operation in which the target second-type precoding information is determined according to the preset rule and the initial second-type precoding information includes: a target element quantization bit is determined, and the initial second-type precoding information is quantized according to the target element quantization bit to obtain the target second-type precoding information, where the target element quantization bit is less than an original element quantization bit. The target element quantization bit refers to a quantization bit used for quantizing the element in the initial second-type precoding information to obtain the target second-type precoding information. In this embodiment, the initial quantization bit for the initial second-type precoding information is the original element quantization bit, and then a new quantization bit, that is, the target element quantization bit, is used to quantize the initial second-type precoding information to obtain the corresponding target second-type precoding information. It is to be understood that the initial second-type precoding information is quantized using the original element quantization bit to obtain the quantized initial second-type precoding information and the initial second-type precoding information is quantized using the target element quantization bit to obtain the target second-type precoding information. The initial second-type precoding information and the target second-type precoding information are the same and are both the second-type precoding information using different corresponding quantization bits. In this embodiment, when the first communication node still transmits the information in at least one CSI report among the L CSI reports in the case where the transmission resources corresponding to the L CSI reports collide, the initial second-type precoding information in the CSI report may be quantized by reducing the quantization precision of the initial second-type precoding information in the CSI report, that is, the initial second-type precoding information is quantized using the target element quantization bit to obtain the target second-type precoding information. In this manner, the total number of bits corresponding to the target second-type precoding information is less than the total number of bits corresponding to the initial second-type precoding information, that is, the information in at least one CSI report among the L CSI reports can be transmitted over the transmission resource by reducing the total number of transmission bits for the initial second-type precoding information.

In an embodiment, the operation in which the target element quantization bit is determined includes one of the following: the target element quantization bit is determined according to the size of a transmission resource for carrying CSI reports; the target element quantization bit is determined according to the size of a transmission resource for carrying CSI reports and a code rate corresponding to the transmission resource; the target element quantization bit is determined according to the size of a remaining transmission resource for carrying CSI reports, or the target element quantization bit is determined according to the size of a remaining transmission resource for carrying CSI reports and a code rate corresponding to a transmission resource. The size of the transmission resource for carrying the CSI report refers to the transmission resource size corresponding to the carrying of the CSI report, and the size of the remaining transmission resource for carrying the CSI report refers to the number of remaining bits for efficiently transmitting the last CSI report (for example, the target second-type precoding information) in the transmission resource. For example, if the transmission resource used for transmitting the CSI report can effectively transmit C CSI reports, then the (C - 1) CSI reports with higher parameter priorities are preferentially transmitted, and the number of bits that the transmission resource can efficiently transmit minus the total number of bits of the CSIs corresponding to the (C - 1) CSI reports with higher priorities is the size of the remaining transmission resource, which is also called the remaining size of the transmission resource. In an embodiment, when the remaining transmission resource size is less than a preset threshold, the terminal no longer transmits the CSI corresponding to the last CSI report to be transmitted. In an embodiment, when the size of the remaining transmission resource is less than a preset threshold, the terminal re-obtains the first-type precoding information corresponding to the channel information according to the channel information and transmits the first-type precoding information. Optionally, the second communication node is notified through a signaling that the terminal transmits the first-type precoding information rather than the second-type precoding information. In an embodiment, when B0 bits remain after the total number of bits of the target second-type precoding information quantized using the target element quantization bit is subtracted from the size of the remaining transmission resource, the B0 bits may be filled with a constant, such as 0 or 1, where B0 is a positive integer. In an embodiment, when B0 bits remain after the total number of bits of the target second-type precoding information quantized according to the target element quantization bit is subtracted from the size of the remaining transmission resource, the B0 bits may be used for increasing the quantization bit for at least one target second-type precoding element. In one specific example, floor(B0/K) elements are selected from the second-type precoding elements according to a preset rule, and each selected element is quantized using its corresponding target element quantization bit plus K bits, where K is a positive integer. For example, when K = 1, B0 elements are selected from the target second-type precoding elements according to the preset rule, and each selected element is quantized using its corresponding target element quantization bit plus 1 bit; when K = 2, B0/2 elements are selected from the target second-type precoding elements according to the preset rule, and each selected element is quantized using its corresponding target element quantization bit plus 2 bits.

In an embodiment, the target element quantization bit may be determined according to the size of the transmission resource, may be determined according to the size of the transmission resource and the code rate corresponding to the transmission resource, may be determined according to the size of the remaining transmission resource, or may be determined according to the size of the remaining transmission resource and the code rate corresponding to the transmission resource. The transmission resource for carrying the CSI report refers to the transmission resource for carrying the C CSI reports.

In an embodiment, the relationship between the target element quantization bit for each element in the target second-type precoding information includes one of the following: the target element quantization bit for each element in the target second-type precoding information is the same, the target element quantization bit for at least one element in the target second-type precoding information is less than the original element quantization bit, or the target element quantization bits for at least two elements in the target second-type precoding information are different from each other. In this embodiment, the elements in the target second-type precoding information may be quantized in a uniform quantization manner, or the elements in the target second-type precoding information may be quantized in a non-uniform quantization manner. In an embodiment, in the case where the elements in the target second-type precoding information are quantized in a uniform quantization manner, the target element quantization bit for each element in the target second-type precoding information is the same; in the case where the elements in the target second-type precoding information are quantized in a non-uniform quantization manner, the target element quantization bit for at least one element in the target second-type precoding information is less than the original element quantization bit. The original element quantization bit refers to the quantization bit for each element in the target second-type precoding information before the quantization precision is reduced. For example, assuming that the target element quantization ratio is P1 and the original element quantization ratio is greater than P1, at least one element in the target second-type precoding information is quantized using the target element quantization bit to enable the target second-type precoding information to be transmitted over a colliding uplink transmission resource by reducing the number of quantization bits for the target second-type precoding information and to enable the second communication node to receive the target second-type precoding information whose quantization precision is reduced. In one example, the target element quantization bits for at least two elements in the target second-type precoding information are different from each other or the target element quantization bit has at least two values. For example, the quantization bits for each element of one part of elements in the target second-type precoding information are b 1 bits, the quantization bits for each element of the other part of elements in the target second-type precoding information are b2 bits, and b 1 and b2 are different positive integers. For example, assuming that the target second-type precoding information includes 20 elements, the target element quantization bits for each element of four elements are 2 bits, the target element quantization bits for each element of five elements are 3 bits, and the target element quantization bits for each element of eleven elements are 4 bits.

In an embodiment, the operation in which the target second-type precoding information is determined according to the preset rule and the initial second-type precoding information includes: the elements of the initial second-type precoding information are grouped according to a first preset grouping manner to obtain C element groups; and the elements in a corresponding element group are quantized according to the target element quantization bit corresponding to each element group, and the target second-type precoding information is determined according to C quantized element groups; where the target element quantization bit corresponding to at least one element group is less than the original element quantization bit, and C is a positive integer greater than 1. In this embodiment, when the first communication node still transmits the information in at least one CSI report among the L CSI reports in the case where the transmission resources corresponding to the L CSI reports collide, at least one CSI report among the L CSI reports may be transmitted in the transmission resources by reducing the number of transmission bits for the second-type precoding information, that is, by reducing the element quantization bit for the element in the target second-type precoding information. In an embodiment, all elements in the initial second-type precoding information may be grouped to obtain at least two element groups, and the target element quantization bit for each element group may be determined according to the size of the transmission resource or may be determined according to the size of the transmission resource and the code rate corresponding to the transmission resource. After the target element quantization bit for each element group is determined, the elements in a corresponding element group are directly quantized using the corresponding target element quantization bit to obtain the target second-type precoding information that meets the transmission requirement. For example, the bits corresponding to C quantized element groups may be combined or joined to obtain the target second-type precoding information, where C is an integer greater than 1. In one example, the combined or joined refers to combining or combining at least one array into a larger array.

In an embodiment, the first preset grouping manner includes one of the following: grouping is performed according to an element index, grouping is performed according to an element size, or grouping is performed according to a preset threshold. In this embodiment, the operation in which grouping is performed according to the element index may be understood as the following: multiple consecutive element indexes are grouped into one group, multiple element groups are obtained in this manner. In this embodiment, the operation in which grouping is performed according to the element size may be understood as the following: the elements are sorted in descending order or ascending order according to the element size, and the sorted elements are grouped into multiple groups to obtain the corresponding multiple element groups. In this embodiment, the operation in which grouping is performed according to the preset threshold may be understood as the following: the size of each element is compared with the preset threshold, the elements whose sizes are larger than the preset threshold are grouped into one group, and elements whose sizes are less than the preset threshold are grouped into one group, so as to obtain two element groups.

In an embodiment, the manner of determining the target element quantization bit corresponding to each element group includes one of the following: the target element quantization bit corresponding to each element group is determined according to a received first signaling, where the first signaling is a higher-level signaling or a physical-layer signaling sent by the second communication node to the first communication node and is used for indicating the number of quantization bits for each element group to the first communication node; the target element quantization bit corresponding to each element group is defaulted; the target element quantization bit corresponding to each element group is determined according to the number of elements of the initial second-type precoding information and the size of a remaining transmission resource; or the target element quantization bit corresponding to each element group is determined by the first communication node. In an embodiment, elements may be grouped into multiple element groups, the elements in each element group are quantized using $K_i$ bits, and the target element quantization bit corresponding to each element group is determined according to the received first signaling. In an embodiment, elements may be grouped into multiple element groups, the elements in each element group are quantized using $K_i$ bits, and the target element quantization bit corresponding to each element group is defaulted. In an embodiment, elements may be grouped into multiple element groups, the elements in each element group are quantized using $K_i$ bits, and the target element quantization bit corresponding to each element group may be determined according to the number of elements of the initial second-type precoding information and the size of the remaining transmission resource. It is to be understood that in the case where the size of the remaining transmission resource is fixed, the larger the number of elements of the initial second-type precoding information, the smaller the target element quantization bit corresponding to each element group; similarly, in the case where the number of elements of the initial second-type precoding information is fixed, the larger the size of the remaining transmission resource, the larger the target element quantization bit corresponding to each element group. In an embodiment, elements may be grouped into multiple element groups, the elements in each element group are quantized using $K_i$ bits, and the target element quantization bit corresponding to each element group is determined by the first communication node. In the case where the target element quantization bit for the element group is determined by the first communication node, the first communication node sends the element grouping manner and the target element quantization bit for each element group to the second communication node. $K_i$ is a positive integer and represents the number of element quantization bits in the i-th element group, where i = 1, ..., C, and C is an integer greater than 1.

In an embodiment, the operation in which the target second-type precoding information is determined according to the preset rule and the initial second-type precoding information includes: the initial second-type precoding information is grouped according to a first preset grouping manner or a second preset grouping manner to obtain C corresponding second-type precoding information groups; and the C second-type precoding information groups are transmitted through Lc CSI reports, where at least one second-type precoding information group corresponding to an i-th CSI report is target second-type precoding information of the i-th CSI report, i = 1, ..., Lc, and Lc is an integer greater than 1 and less than or equal to C. In an embodiment, at least one second-type precoding information group corresponding to the i-th CSI report being the target second-type precoding information of the i-th CSI report may be understood as the following: one CSI report may correspond to at least one second-type precoding information group or may be understood as the following: at least one CSI report may correspond to at least two second-type precoding information groups. In this embodiment, when the first communication node still transmits the information in at least one CSI report among the L CSI reports in the case where the transmission resources corresponding to the L CSI reports collide, the initial second-type precoding information may be grouped according to the first preset grouping manner to obtain C corresponding second-type precoding information groups; alternatively, channels corresponding to the initial second-type precoding information are grouped according to the second preset grouping manner to obtain C corresponding channel groups, and C second-type precoding information groups are obtained according to the C channel groups. The C second-type precoding information groups are then transmitted through the Lc CSI reports and transmitted to the second communication node. This example may be understood as that: by transmitting the information in the C second-type precoding information groups through the Lc CSI reports, that is, by reducing the number of transmission bits for the second-type precoding information corresponding to each CSI report, all second-type precoding information is transmitted to the second communication node. In one example, the first preset grouping manner includes one of the following: grouping is performed according to an element index, grouping is performed according to an element size, or grouping is performed according to a preset threshold. In one example, the second preset grouping manner includes at least one of the following: grouping is performed according to a transmission layer; grouping is performed according to a transmitting port and/or a receiving port; grouping is performed according to a sub-band; grouping is performed according to a data stream or a codeword; grouping is performed according to a time domain power delay; grouping is performed according to a time domain impulse response; or grouping is performed according to at least one preset pattern. The transmitting port and the receiving port may be understood as physical antennas or logical antennas. The preset pattern may be pre-configured by the second communication node or may be negotiated between the first communication node and the second communication node, and each preset pattern includes at least one of the following: a time domain resource, a frequency domain resource or a spatial domain resource.

In an embodiment, the relationship between the Lc CSI reports corresponding to the C second-type precoding information groups includes one of the following: the Lc CSI reports have the same first channel report index; the Lc CSI reports have the same first channel resource location; the Lc CSI reports have the same second channel report index; the Lc CSI reports have the same second channel resource location; or the Lc CSI reports have the same uplink control resource identifier. In one example, in the case where Lc = C, one CSI report corresponds to one second-type precoding information group. In one example, in the case where Lc < C, at least one CSI report corresponds to at least two second-type precoding information groups. In the embodiment, the Lc CSI reports corresponding to the C second-type precoding information groups may have the same first channel report index, may have the same first channel resource location, may have the same second channel report index, may have the same second channel resource location, or may have the same uplink control resource identifier. The Lc CSI reports corresponding to the C second-type precoding information groups have the same first channel report index means that the Lc CSI reports corresponding to the C second-type precoding information groups have the same report identifier over the first channel. The Lc CSI reports corresponding to the C second-type precoding information groups have the same first channel resource location means that the transmission resources of the Lc CSI reports corresponding to the C second-type precoding information groups over the first channel have the same time domain symbol set and/or the same frequency domain set. The Lc CSI reports corresponding to the C second-type precoding information groups having the same second channel report index means that the Lc CSI reports corresponding to the C second-type precoding information groups have the same report identifier over the second channel. The Lc CSI reports corresponding to the C second-type precoding information groups having the same second channel resource location means that the transmission resources of the Lc CSI reports corresponding to the C second-type precoding information groups over the second channel have the same time domain symbol set and/or the same frequency domain set. The Lc CSI reports corresponding to the C second-type precoding information groups having the same uplink control resource identifier means that the identifiers of the uplink control resources of the Lc CSI reports corresponding to the C second-type precoding information groups are the same or may be understood as the following: the IDs of the uplink control resources are the same. For example, the first channel refers to a PUSCH, and the second channel refers to a PUCCH.

In an embodiment, the operation in which the C second-type precoding information groups are transmitted through the Lc CSI reports includes: a k-th CSI report is transmitted in a slot $n + (k - 1)*X$, where n is the transmission slot of a first CSI report, the slot interval X is a positive integer greater than or equal to 1, $k = 1, ..., Lc$, and Lc is an integer greater than 1 and less than or equal to C. In this embodiment, the CSI reports are transmitted in different slots. For example, the k-th CSI report is transmitted in the slot $n + (k - 1)*X$, where $k = 1, ..., Lc$, and Lc is an integer greater than 1 and less than or equal to C.

In an embodiment, the number Lc of the CSI reports used for transmitting the C second-type precoding information groups is determined according to one of the following manners: Lc is determined according to a received second signaling, where second signaling is a higher-level signaling or a physical-layer signaling sent by the second communication node to the first communication node and is used for indicating the number (that is, the number C of second-type CSI sub-reports) of CSI sub-reports that the first communication node may split; Lc is determined according to the number of colliding second-type CSI reports among the L CSI reports; Lc is determined according to the total number of transmission bits corresponding to colliding second-type CSI reports among the L CSI reports; Lc is determined according to the total number of transmission bits corresponding to colliding second-type CSI reports among the L CSI reports and a code rate; Lc is determined according to the size of the transmission resource used for transmitting the second-type CSI reports; or Lc is determined according to the size of the remaining transmission resource for carrying a CSI report and a code rate corresponding to the transmission resource. In this embodiment, the number of target reports refers to the number of second-type CSI sub-reports that one second-type CSI report is divided into. In this embodiment, the number of target reports may be directly pre-configured by the second communication node; the number of target reports may be directly determined through the received second signaling (the second signaling may be a signaling configured by the second communication node); the number of target reports may be determined according to the number of colliding second-type CSI reports among the L CSI reports; the number of target reports may be determined according to the total number of transmission bits corresponding to colliding second-type CSI reports among the L CSI reports; the number of target reports may be determined according to the total number of transmission bits corresponding to colliding second-type CSI reports among the L CSI reports and a code rate; the number of target reports may be determined according to the size of the transmission resource used for transmitting the second-type CSI report; or the number of target reports may be determined according to the size of the remaining transmission resource for carrying a CSI report and a code rate corresponding to the transmission resource, which is not limited herein.

In an embodiment, the operation in which the target second-type precoding information is determined according to the preset rule and the initial second-type precoding information includes: channels corresponding to the initial second-type precoding information are grouped according to a second preset grouping manner to obtain C channel groups; C second-type precoding information groups are obtained according to the C channel groups; and at least one piece of second-type precoding information is selected from the C second-type precoding information groups according to the PVs of the C second-type precoding information groups to determine the target second-type precoding information. In this embodiment, when the first communication node still transmits the information in at least one CSI report among the L CSI reports in the case where the transmission resources corresponding to the L CSI reports collide, channels corresponding to the initial second-type precoding information may be grouped to obtain C channel groups, the C channel groups are input into an encoder to obtain C corresponding second-type precoding information groups, and at least one piece of second-type precoding information is selected from the C second-type precoding information groups according to the priorities of the C second-type precoding information groups. Generally, the number $B1$ of bits corresponding to the C second-type precoding information groups is less than the number $B2$ of bits corresponding to one piece of second-type precoding information generated before the original channel information is grouped. For example, $B1$ is close to $1/C$ of $B2$.

In an embodiment, the operation in which at least one second-type precoding information group is selected from the C second-type precoding information groups according to the PVs of the C second-type precoding information groups to determine the target second-type precoding information includes: the C second-type precoding information groups are screened according to the PVs of the C second-type precoding information groups, and at least one second-type precoding information group that meets the transmission requirement after screening is taken as the target second-type precoding information. In this embodiment, the PV of each second-type precoding information group among the C second-type precoding information groups is determined, and the second-type precoding information groups are sorted in ascending order of the PVs; the second-type precoding information group with the largest PV is dropped first, the second-type precoding information group with the second largest PV is dropped next, and so on, until the transmission resource used for transmitting the second-type precoding information groups meets the transmission requirement; the precoding information in the remaining second-type precoding information group is taken as the target second-type precoding information.

In an embodiment, the second-type precoding information corresponding to each channel in each channel group is obtained, the PV of each piece of second-type precoding information is determined, and all pieces of second-type precoding information are sorted in ascending order of the PVs; the second-type precoding information with the largest PV is dropped first, the second-type precoding information group with the second largest PV is dropped next, and so on, until the transmission resource used for transmitting the second-type precoding information groups meets the transmission requirement. In one example, the PVs of multiple pieces of different second-type precoding information may be determined according to the index of the channel group corresponding to each piece of second-type precoding information, where the larger the index of the channel group, the larger the PV of the corresponding second-type precoding information. In one example, the PVs of multiple pieces of different second-type precoding information are determined in a manner agreed upon by the base station and the terminal. In one example, the PVs of multiple pieces of different second-type precoding information are determined according to the time sequence in which the multiple pieces of second-type precoding information are generated.

In an embodiment, the operation in which the target second-type precoding information is determined according to the preset rule and the initial second-type precoding information includes: the initial second-type precoding information is grouped according to a first preset grouping manner to obtain C second-type precoding information groups, and at least one second-type precoding information group is selected from the C second-type precoding information groups according to the PVs of the C second-type precoding information groups to determine the target second-type precoding information. In an embodiment, when the first communication node still transmits the information in at least one CSI report among the L CSI reports in the case where the transmission resources corresponding to the L CSI reports collide, the initial second-type precoding information may be grouped according to a preset grouping manner to obtain C second-type precoding information groups, and at least one second-type precoding information group is selected from the C second-type precoding information groups according to the PVs of the C second-type precoding information groups to determine the target second-type precoding information. The second-type precoding information group herein may also be referred to as second-type precoding sub-information and is a part of information or a part of bits of the original second-type precoding information.

In an embodiment, the operation in which at least one second-type precoding information group is selected from the C second-type precoding information groups according to the PVs of the C second-type precoding information groups to determine the target second-type precoding information includes: the C second-type precoding information groups are screened according to the PVs of the C second-type precoding information groups, and at least one second-type precoding information group that meets the transmission requirement after screening is transmitted. In this embodiment, the PV of each second-type precoding information group among the C second-type precoding information groups is determined, and the second-type precoding information groups are sorted in ascending order of the PVs; the second-type precoding information group with the largest PV is dropped first, the second-type precoding information group with the second largest PV is dropped next, and so on, until the transmission resource used for transmitting the second-type precoding information groups meets the transmission requirement; the precoding information in the remaining second-type precoding information group is taken as the target second-type precoding information. In one example, the PVs of multiple different second-type precoding information groups may be determined according to the index of each second-type precoding information group, where the larger the index of the second-type precoding information group, the larger the PV of the corresponding second-type precoding information group. In one example, the PVs of multiple different second-type precoding information groups are determined in a manner agreed upon by the base station and the terminal. In one example, the PVs of multiple different second-type precoding information groups are determined according to the time sequence in which the multiple second-type precoding information groups are generated.

In an embodiment, the second preset grouping manner includes at least one of the following: grouping is performed according to a transmission layer; grouping is performed according to a transmitting port and/or a receiving port; grouping is performed according to a sub-band; grouping is performed according to a data stream or a codeword; grouping is performed according to a time domain power delay; grouping is performed according to a time domain impulse response; or grouping is performed according to a preset pattern, where each preset pattern includes at least one of the following: a time domain resource, a frequency domain resource or a spatial domain resource.

In an embodiment, the operation in which the target second-type precoding information is determined according to the preset rule and the initial second-type precoding information includes: the initial second-type precoding information is quantized according to a nesting pattern to obtain nested quantized initial second-type precoding information, and at least one quantization bit for the nested quantized initial second-type precoding information is selected as the target second-type precoding information. In an embodiment, when the first communication node still transmits the information in at least one CSI report among the L CSI reports in the case where the transmission resources corresponding to the L CSI reports collide, the initial second-type precoding information may be nested and quantized according to a nesting pattern to obtain pieces of second-type precoding information configured at multiple levels, the second-type precoding information at the last level is dropped, the second-type precoding information at the second last level is dropped, and so on, until the resource used for transmitting the second-type precoding information meets the transmission requirement.

For example, it is assumed that there are L layers of nesting levels, and the quantization bit set for the initial second-type precoding matrix information is the bit set corresponding to the second-type precoding information, that is, $[A_1, A_2, A_3, ..., A_L]$. The bit set corresponding to the second-type precoding information in the first layer is $A_1$, the bit set corresponding to the second-type precoding information in the second layer is $[A_1, A_2]$, the bit set corresponding to the second-type precoding information in the third layer is $[A_1, A_2, A_3]$, ..., the bit set corresponding to the second-type precoding information in the L-th layer is $[A_1, A_2, A_3, ..., A_L]$, and then the bits $[A_1, A_2, A_3, ..., A_i]$ corresponding to the nested second-type precoding information in the i-th layer are selected to form the target second-type precoding information, where $i \leq L$, $A_1, A_2, A_3, ..., A_L$ are each a set including at least one element, and optionally, the value of each element is 0 or 1.

In an embodiment, FIG. 2 is a flowchart of another information transmission method according to an embodiment of the present application. This embodiment may be executed by an information transmission device. The information transmission device may be a second communication node. For example, the second communication node may be a base station. As shown in FIG. 2, this embodiment includes S210 and S220.

In S210, information in at least one CSI report sent by a first communication node is received.

The information in the at least one CSI report includes target second-type precoding information.

In S220, first channel information is obtained according to the target second-type precoding information.

In this embodiment, after the second communication node receives the target second-type precoding information corresponding to at least one CSI report sent by the first communication node, the second communication node obtains the first channel information according to the target second-type precoding information corresponding to the at least one CSI report. In one example, the first channel information is a channel matrix. In one example, the first channel information is channel information or a precoding matrix determined according to all or part of the content of a second-type CSI report, including, but not limited to, the result output after all or part of the content of a second-type CSI report is input into the decoder of an AI module. In one example, the first channel information is first-type precoding information. In this embodiment, the first communication node inputs second channel information into the encoder of the AI module to obtain a corresponding precoding matrix, quantizes the precoding matrix, and sends the quantized information to the second communication node. The second communication node performs a de-quantization operation and inputs the de-quantized information into the decoder of the AI module to obtain the corresponding first channel information. It is to be understood that the first channel information is the information obtained by encoding, quantizing, de-quantizing and decoding the second channel information, but the first channel information and the second channel information are similar but not identical.

In an embodiment, the PVs of the CSI reports are determined in the following manner: the PV of each CSI report is determined according to at least one of a first initial parameter, a second initial parameter, a third initial parameter or a fourth initial parameter.

In an embodiment, the value of the first initial parameter is a non-negative integer less than or equal to 7, and the meaning corresponding to the value includes at least one of the following: the value of the first initial parameter being less than or equal to 3 indicates that the value corresponds to a first-type CSI report; the value of the first initial parameter being greater than 3 indicates that the value corresponds to a second-type CSI report. In this embodiment, in the case where the first initial parameter is less than or equal to 3, the meaning corresponding to the value of the first initial parameter may include one of the following: an aperiodic first-type CSI report carried over a first channel, a semi-persistent first-type CSI report carried over a first channel, a semi-persistent first-type CSI report carried over a second channel or a periodic first-type CSI report carried over a first channel; in the case where the first initial parameter is greater than 3, the meaning corresponding to the value of the first initial parameter may include one of the following: an aperiodic second-type CSI report carried over a first channel, a semi-persistent second-type CSI report carried over a first channel, a semi-persistent second-type CSI report carried over a second channel or a periodic second-type CSI report carried over a second channel.

In an embodiment, the value of the second initial parameter is a non-negative integer less than or equal to 2, and the meaning corresponding to the value includes at least one of the following: the value of the second initial parameter being less than or equal to 1 indicates that the value corresponds to a first-type CSI report; the value of the second initial parameter being greater than 1 indicates that the value corresponds to a second-type CSI report. In this embodiment, in the case where the second initial parameter is less than or equal to 1, the meaning of the value of the second initial parameter includes one of the following: a CSI report carrying an L1-RSRP or an L1-SINR or a first-type CSI report not carrying an L1-RSRP or an L1-SINR; in the case where the second initial parameter is greater than 1, the meaning of the value of the second initial parameter includes a second-type CSI report not carrying an L1-RSRP or an L1-SINR.

In an embodiment, the value of the third initial parameter is a non-negative integer less than $2N_{cell}$, and the meaning corresponding to the value includes one of the following: the value of the third initial parameter being less than $N_{cell}$ indicates that the value corresponds to a first-type CSI report; the value of the value of the third initial parameter being greater than or equal to $N_{cell}$ indicates that the value corresponds to a second-type CSI report, where $N_{cell}$ represents the maximum number of serving cells.

In an embodiment, the value of the fourth initial parameter is a non-negative integer less than $2M_s$, and the meaning corresponding to the value includes one of the following: in the case where the value of the fourth initial parameter is less than $M_s$ indicates that the value corresponds to a first-type CSI report; the value of the fourth initial parameter being greater than or equal to $M_s$ indicates that the value corresponds to a second-type CSI report, where $2M_s$ represents the maximum number of reports.

In an embodiment, the PV of the CSI report is determined in the following manner: the PVs of the L CSI reports are determined according to at least one of a first target parameter, a second target parameter, a third target parameter or a fourth target parameter.

In an embodiment, the first target parameter is determined according to a first initial parameter and a first preset offset, the second target parameter is determined according to a second initial parameter and a second preset offset, the third target parameter is determined according to a third initial parameter and a third preset offset, and the fourth target parameter is determined according to a fourth initial parameter and a fourth preset offset; where the first initial parameter is a non-negative integer less than or equal to 3, and the value of the first preset offset is 0 or a positive integer greater than or equal to 4; the second initial parameter is a non-negative integer less than or equal to 1, and the value of the second preset offset is 0 or a positive integer greater than or equal to 2; the third initial parameter is a non-negative integer less than or equal to the maximum number $N_{cell}$ of serving cells, and the value of the third preset offset is 0 or a positive integer greater than or equal to $N_{cell}$; the fourth initial parameter is a non-negative integer less than or equal to the maximum number $M_s$ of CSI reports, and the value of the fourth preset offset is 0 or a positive integer greater than or equal to $M_s$.

In an embodiment, the information in the at least one CSI report includes initial second-type precoding information; and the target second-type precoding information is determined by the first communication node according to a preset rule and the initial second-type precoding information.

In an embodiment, the operation in which the target second-type precoding information is determined by the first communication node according to the preset rule and the initial second-type precoding information includes:

a target element quantization bit is determined by the first communication node; and

the initial second-type precoding information is quantized by the first communication node according to the target element quantization bit to obtain the target second-type precoding information, where the target element quantization bit is less than an original element quantization bit, and the initial second-type precoding information and the target second-type precoding information are both the second-type precoding information.

In an embodiment, the operation in which the target element quantization bit is determined by the first communication node includes one of the following:

the target element quantization bit is determined by the first communication node according to the size of a transmission resource for carrying CSI reports;

the target element quantization bit is determined by the first communication node according to the size of a transmission resource for carrying CSI reports and a code rate corresponding to the transmission resource;

the target element quantization bit is determined by the first communication node according to the size of a remaining transmission resource for carrying CSI reports; or

the target element quantization bit is determined by the first communication node according to the size of a remaining transmission resource for carrying CSI reports and a code rate corresponding to a transmission resource.

In an embodiment, the relationship between the target element quantization bit for each element in the target second-type precoding information includes one of the following: the target element quantization bit for each element in the target second-type precoding information is the same, the target element quantization bit for at least one element in the target second-type precoding information is less than the original element quantization bit, or the target element quantization bits for at least two elements in the target second-type precoding information are different from each other.

In an embodiment, the operation in which the target second-type precoding information is determined by the first communication node according to the preset rule and the initial second-type precoding information includes:

elements of the initial second-type precoding information are grouped by the first communication node according to a first preset grouping manner to obtain C element groups; and

elements in a corresponding element group are quantized by the first communication node according to the target element quantization bit corresponding to each element group, and the target second-type precoding information is determined according to C quantized element groups;

where the target element quantization bit corresponding to at least one element group is less than the original element quantization bit, and C is a positive integer greater than 1.

In an embodiment, the first preset grouping manner includes one of the following: grouping is performed according to an element index, grouping is performed according to an element size, or grouping is performed according to a preset threshold.

In an embodiment, the manner of determining the target element quantization bit corresponding to each element group includes one of the following: the target element quantization bit corresponding to each element group is determined according to a received first signaling; the target element quantization bit corresponding to each element group is defaulted; the target element quantization bit corresponding to each element group is determined according to the number of elements of the initial second-type precoding information and the size of a remaining transmission resource; or the target element quantization bit corresponding to each element group is determined by the first communication node.

In an embodiment, the operation in which the target second-type precoding information is determined by the first communication node according to the preset rule and the initial second-type precoding information includes:

the initial second-type precoding information is grouped by the first communication node according to a first preset grouping manner or a second preset grouping manner to obtain C corresponding second-type precoding information groups; and

the C second-type precoding information groups are transmitted through Lc CSI reports, where at least one second-type precoding information group corresponding to the i-th CSI report is the target second-type precoding information of the i-th CSI report, i = 1, ..., Lc, and Lc is an integer greater than 1 and less than or equal to C.

In an embodiment, the relationship between the Lc CSI reports corresponding to the C second-type precoding information groups includes one of the following: the Lc CSI reports have the same first channel report index; the Lc CSI reports have the same first channel resource location; the Lc CSI reports have the same second channel report index; the Lc CSI reports have the same second channel resource location; or the Lc CSI reports have the same uplink control resource identifier.

In an embodiment, the operation in which the C second-type precoding information groups are transmitted through the Lc CSI reports includes: a k-th CSI report is transmitted in a slot n + (k - 1)*X, where n is the transmission slot of a first CSI report, the slot interval X is a positive integer greater than or equal to 1, k = 0, ..., Lc, and Lc is an integer greater than 1 and less than or equal to C.

In an embodiment, the number Lc of the CSI reports used for transmitting the C second-type precoding information groups is determined according to one of the following manners: Lc is determined according to a received second signaling; Lc is determined according to the number of colliding second-type CSI reports among the L CSI reports; Lc is determined according to the total number of transmission bits corresponding to colliding second-type CSI reports among the L CSI reports; Lc is determined according to the total number of transmission bits corresponding to colliding second-type CSI reports among the L CSI reports and a code rate; or Lc is determined according to the size of the transmission resource used for transmitting the second-type CSI report.

In an embodiment, the operation in which the target second-type precoding information is determined by the first communication node according to the preset rule and the initial second-type precoding information includes:

channels corresponding to a second-type CSI report are grouped by the first communication node according to a second preset grouping manner to obtain C corresponding channel groups;

C second-type precoding information groups are obtained by the first communication node according to the C channel groups; and

at least one second-type precoding information group is selected by the first communication node from the C second-type precoding information groups according to the PVs of the C second-type precoding information groups to determine the target second-type precoding information.

In an embodiment, the operation in which the target second-type precoding information is determined by the first communication node according to the preset rule and the initial second-type precoding information includes:

the initial second-type precoding information is grouped by the first communication node according to a first preset grouping manner to obtain C corresponding second-type precoding information groups; and

at least one second-type precoding information group is selected by the first communication node from the C second-type precoding information groups according to the PVs of the C second-type precoding information groups to determine the target second-type precoding information.

In an embodiment, the second preset grouping manner includes at least one of the following: grouping is performed according to a transmission layer; grouping is performed according to a transmitting port and/or a receiving port; grouping is performed according to a sub-band; grouping is performed according to a data stream or a codeword; grouping is performed according to a time domain power delay; grouping is performed according to a time domain impulse response; or grouping is performed according to at least one preset pattern, where each preset pattern includes at least one of the following: a time domain resource, a frequency domain resource or a spatial domain resource.

In an embodiment, the operation in which the target second-type precoding information is determined by the first communication node according to the preset rule and the initial second-type precoding information includes:

the initial second-type precoding information is quantized by the first communication node according to a nesting pattern to obtain nested quantized initial second-type precoding information; and

at least one quantization bit for the nested quantized initial second-type precoding information is selected by the first communication node as the target second-type precoding information.

It is to be noted that for the explanation of various parameters in the information transmission method applied to the second communication node, reference may be made to the description of the corresponding parameters in the embodiments of the information transmission method applied to the first communication node, and the details are not repeated herein.

In one example, the transmission process of the CSI report is described using an example in which the first communication node is a terminal and the second communication node is a base station. The terminal needs to feed multiple CSI reports back, where the transmission resources corresponding to at least L CSI reports among the multiple CSI reports collide. In one example, the L colliding CSI reports include at least one second-type precoding report (that is, a second-type CSI report), where L is a positive integer. In an embodiment, the PVs of the L colliding CSI reports may be calculated according to a priority calculation formula, and according to the PVs sorted in ascending order, at least one CSI report with a small priority is selected and then transmitted over the transmission resource. This embodiment may include the following examples.

In one example, the PV of a CSI report is determined by varying the value of a first initial parameter. In an embodiment, the PV of one CSI report is calculated through the following formula:

$$\text{Pri}_{i_{CSI}}(y, k, c, s) = 2 \cdot N_{cells} \cdot M_s \cdot y + N_{cells} \cdot M_s \cdot k + M_s \cdot c + s.$$

In the above formula, y, k, c and s represents a first initial parameter in the PV formula, a second initial parameter in the PV formula, a third initial parameter in the PV formula, and a fourth initial parameter in the PV formula, respectively, and, all are non-negative integers. The meanings of the values of these four initial parameters are as follows:

y = 0 represents an aperiodic first-type CSI report carried over a PUSCH, y = 1 represents a semi-persistent first-type CSI report carried over a PUSCH, y = 2 represents a semi-persistent first-type CSI report carried over a PUCCH, and y = 3 represents a periodic first-type CSI report carried over a PUCCH. In some examples, y may be greater than 3. In one example, y = 4 represents an aperiodic second-type CSI report carried over a PUSCH. In one example, y = 5 represents a semi-persistent second-type CSI report carried over a PUSCH. In one example, y = 6 represents a semi-persistent second-type CSI report carried over a PUCCH. In one example, y = 7 represents a periodic second-type CSI report carried over a PUCCH.

k = 0 represents a CSI report carrying an L1-RSRP or an L1-SINR, and k = 1 represents a first-type CSI report not carrying an L1-RSRP or an L1-SINR.

c represents the serving cell index, and $N_{cells}$ represents the maximum number maxNrofServingCells of serving cells configured by the higher layer.

s represents the report configuration index reportConfigID, and $M_s$ represents the maximum number maxNrofCSI-ReportConfigurations of reports configured by the higher layer. In one example, the value range of s is 0, ..., $M_s$.

In one example, the PV of a CSI report is determined by varying the value of a second initial parameter. In an embodiment, the PV of one CSI report is calculated through the following formula:

$$\text{Pri}_{i_{CSI}}(y, k, c, s) = 3 \cdot N_{cells} \cdot M_s \cdot y + N_{cells} \cdot M_s \cdot k + M_s \cdot c + s.$$

In the above formula, y, k, c and s represents a first initial parameter in the PV formula, a second initial parameter in the PV formula, a third initial parameter in the PV formula, and a fourth initial parameter in the PV formula, respectively, and, all are non-negative integers. The meanings of the values of these four initial parameters are as follows:

y = 0 represents an aperiodic first-type CSI report carried over a PUSCH, y = 1 represents a semi-persistent first-type CSI report carried over a PUSCH, y = 2 represents a semi-persistent first-type CSI report carried over a PUCCH, and y = 3 represents a periodic first-type CSI report carried over a PUCCH.

k = 0 represents a CSI report carrying an L1-RSRP or an L1-SINR, k = 1 represents a CSI report not carrying an L1-RSRP or an L1-SINR, and k = 2 represents a second-type CSI report not carrying an L1-RSRP or an L1-SINR.

c represents the serving cell index, and $N_{cells}$ represents the maximum number maxNrofServingCells of serving cells configured by the higher layer.

s represents the report configuration index reportConfigID, and $M_s$ represents the maximum number maxNrofCSI-ReportConfigurations of reports configured by the higher layer. In one example, the value range of s is 0, ..., $M_s$ - 1.

In one example, the PV of a CSI report is determined by varying the value of a third initial parameter. In an embodiment, the PV of one CSI report is calculated through the following formula:

$$\text{Pri}_{\text{iCSI}}(y, k, c, s) = 2 \cdot N'_{\text{cells}} \cdot M_s \cdot y + N'_{\text{cells}} \cdot M_s \cdot k + M_s \cdot c + s.$$

In the above formula, y, k, c and s represents a first initial parameter in the PV formula, a second initial parameter in the PV formula, a third initial parameter in the PV formula, and a fourth initial parameter in the PV formula, respectively, and, all are non-negative integers. The meanings of the values of these four initial parameters are as follows:

y = 0 represents an aperiodic first-type CSI report carried over a PUSCH, y = 1 represents a semi-persistent first-type CSI report carried over a PUSCH, y = 2 represents a semi-persistent first-type CSI report carried over a PUCCH, and y = 3 represents a periodic first-type CSI report carried over a PUCCH.

k = 0 represents a CSI report carrying an L1-RSRP or an L1-SINR, and k = 1 represents a first-type CSI report not carrying an L1-RSRP or an L1-SINR.

c represents the serving cell index, and $N'_{\text{cells}}$ represents the maximum number maxNrofServingCells of serving cells configured by the higher layer. In one example, the value range of c is 0, ..., $2*N_{\text{cells}}$, where when c is 0, ..., $N_{\text{cells}}$ - 1, it is indicated that a first-type CSI report is fed back, and when c is $N_{\text{cells}}$, ..., $2*N_{\text{cells}}$ - 1, it is indicated that a second-type CSI report is fed back.

s represents the report configuration index reportConfigID, and $M_s$ represents the maximum number maxNrofCSI-ReportConfigurations of reports configured by the higher layer.

In one example, the PV of a CSI report is determined by varying the value of a fourth initial parameter. In an embodiment, the PV of a CSI report is calculated through the following formula:

$$\text{Pri}_{\text{iCSI}}(y, k, c, s) = 2 \cdot N_{\text{cells}} \cdot M_s \cdot y + N_{\text{cells}} \cdot M_s \cdot k + M'_s \cdot c + s.$$

In the above formula, y, k, c and s represents a first initial parameter in the PV formula, a second initial parameter in the PV formula, a third initial parameter in the PV formula, and a fourth initial parameter in the PV formula, respectively, and, all are non-negative integers. The meanings of the values of these four initial parameters are as follows:

y = 0 represents an aperiodic first-type CSI report carried over a PUSCH, y = 1 represents a semi-persistent first-type CSI report carried over a PUSCH, y = 2 represents a semi-persistent first-type CSI report carried over a PUCCH, and y = 3 represents a periodic first-type CSI report carried over a PUCCH.

k = 0 represents a CSI report carrying an L1-RSRP or an L1-SINR, and k = 1 represents a first-type CSI report not carrying an L1-RSRP or an L1-SINR.

c represents the serving cell index, and $N_{\text{cells}}$ represents the maximum number maxNrofServingCells of serving cells configured by the higher layer.

s represents the report configuration index reportConfigID, $M'_s = 2M_s$, and $M_s$ represents the maximum number maxNrofCSI-ReportConfigurations of reports configured by the higher layer. The value range of s is 0, ..., $M'_s$, where when s is 0, ..., $M_s$ - 1, it is indicated that a first-type CSI report is fed back, and when s is $M_s$, ..., $2*M_s$ - 1, it is indicated that a second-type CSI report is fed back.

In an embodiment, the base station may determine the PV of a CSI report through a preset offset. The preset offset refers to a bias of the priority. The preset offset includes a first preset offset, a second preset offset, a third preset offset, and a fourth preset offset. Each initial parameter corresponds to one preset offset.

In one example, the PV of a CSI report is determined through a first initial parameter and a first preset offset (which is denoted as offset) in the PV formula. In an embodiment, the formula for calculating the PV is:

$$\text{Pri}_{\text{iCSI}}(y, k, c, s) = 2 \cdot N_{\text{cells}} \cdot M_s \cdot y' + N_{\text{cells}} \cdot M_s \cdot k + M_s \cdot c + s.$$

In the above formula, y' represents a first target parameter in the PV formula, and y' = y + offset, where in the case of a first-type CSI report, the value of offset is 0, and in the case of a second-type CSI report, the value of offset is 1; y = 0, 1, 2, 3, k = 0, ..., 1, c = 0, ..., $N_{cells}$, and s = 0, ..., $M_s$, where $N_{cells}$ and $M_s$ represent the maximum number maxNrofServingCells of serving cells configured by the higher layer and the maximum number maxNrofCSI-ReportConfigurations of reports configured by the higher level, respectively.

In one example, the PV of a CSI report is determined through a second initial parameter and a second preset offset (which is denoted as offset) in the PV formula. In an embodiment, the formula for calculating the PV is:

$$\mathrm{Pri}_{iCSI}(y, k, c, s) = 3 \cdot N_{cells} \cdot M_s \cdot y + N_{cells} \cdot M_s \cdot k' + M_s \cdot c + s.$$

In the above formula, k' represents a second target parameter in the PV formula, and k' = k' + offset, where in the case of a first-type CSI report, the value of offset is 0, and in the case of a second-type CSI report, the value of offset is 2; y = 0, 1, 2, 3, k = 0, ..., 1, c = 0, ..., $N_s$, and s = 0, ..., $M_s$, where $N_{cells}$ and $M_s$ represent the maximum number maxNrofServingCells of serving cells configured by the higher layer and the maximum number maxNrofCSI-Report-Configurations of reports configured by the higher layer, respectively.

In one example, the PV of a CSI report is determined through a third initial parameter and a third preset offset (which is denoted as offset) in the PV formula. In an embodiment, the formula for calculating the PV is:

$$\mathrm{Pri}_{iCSI}(y, k, c, s) = 4 \cdot N_{cells} \cdot M_s \cdot y + 2 \cdot N_{cells} \cdot M_s \cdot k + M_s \cdot c' + s.$$

In the above formula, c' represents a third target parameter in the PV formula, and c' = c + offset, where in the case of a first-type CSI report, the value of offset is 0, and in the case of a second-type CSI report, the value of offset is $N_{cells}$; y = 0, 1, 2, 3, k = 0, ..., 1, c = 0, ..., $N_{cells}$, and s = 0, ..., $M_s$, where $N_{cells}$ and $M_s$ represent the maximum number maxNrofServingCells of serving cells configured by the higher layer and the maximum number maxNrofCSI-Report-Configurations of reports configured by the higher layer, respectively.

In one example, the PV of a CSI report is determined through a fourth initial parameter and a fourth preset offset (which is denoted as offset) in the PV formula. In an embodiment, the formula for calculating the PV is:

$$\mathrm{Pri}_{iCSI}(y, k, c, s) = 4 \cdot N_{cells} \cdot M_s \cdot y + 2 \cdot N_{cells} \cdot M_s \cdot k + 2 \cdot M_s \cdot c + s'.$$

In the above formula, s' represents a fourth target parameter in the PV formula, and s' = s + offset, where in the case of a first-type CSI report, the value of offset is 0, and in the case of a second-type CSI report, the value of offset is $M_s$; y = 0, 1, 2, 3, k = 0, ..., 1, c = 0, ..., $N_{cells}$, and s = 0, ..., $M_s$, where $N_{cells}$ and $M_s$ represent the maximum number maxNrofServingCells of serving cells configured by the higher layer and the maximum number maxNrofCSI-Report-Configurations of reports configured by the higher layer, respectively.

In an embodiment, in the case where the transmission resources corresponding to multiple CSI reports collide, for example, in the case where the transmission resources corresponding to L second-type CSI reports collide, the terminal still transmits at least one second-type CSI report among the L second-type CSI reports, where L is an integer greater than 1. At this point, the quantization precision of the second-type precoding in the second-type CSI report may be reduced to reduce the number of transmission bits for the second-type precoding to enable at least one second-type CSI report among the L second-type CSI reports to be transmitted over the transmission resource. The base station receives the second-type precoding information corresponding to the at least one second-type CSI report and obtains a precoding matrix according to the second-type precoding information corresponding to the at least one second-type CSI report.

In one example, it is assumed that the second-type precoding information includes K elements, the original element quantization bit is at least a bits, and the target element quantization bit is at least b bits. In an embodiment, when the terminal feeds the second-type precoding information back to the base station, each element in the second-type precoding information is quantized using at least a bits, where a is an integer greater than 1, that is, the terminal requires at least K*a bits to feed the second-type precoding information back to the base station. In one example, in the case where the second-type CSI report including the second-type precoding information and another CSI report collide, the number of the quantization bits for the second-type precoding information in the second-type CSI report needs to be reduced. Assuming that the second-type precoding information includes K elements, each element is quantized using at least b bits before the second-type precoding information is fed back, where b is an integer greater than 1 and is less than a, and then at least K*b bits are required to feed the second-type precoding information back. By reducing the number of quantization bits for the second-type precoding information, the second-type precoding information is thereby transmitted over a colliding uplink resource. The base station receives the second-type precoding information with a reduced quantization precision and inputs the second-type precoding information into the AI module to restore the channel information. In one example, the terminal needs to feed the value b of the target element quantization bit back. In one example, the value of b is determined according to the size of a resource for transmitting the CSI. In one example, the value of b is determined according to the size of a resource for transmitting the CSI and the code rate of the resource for transmitting the CSI configured by an RRC. In one example, b is determined according to the total number of bits for transmitting L colliding CSI reports. For example, when the total number of bits is T, b = floor(a/T), where floor denotes a floor function. In one example, b has C candidate values, and the candidate values are configured according to the higher-level signaling. In one example, b has C candidate values, and the candidate values are agreed upon by the terminal and the base station. In one example, b has C candidate values, and the candidate values are determined according to the size of the system bandwidth. For example, the system bandwidths with different sizes are grouped into C sets, and the bandwidth in each set corresponds to one value of b or a set of values of b. In one example, b has C candidate values, and the candidate values are determined according to the bandwidth part (BWP). For example, the BWPs with different sizes are grouped into C sets, and the BWP in each set corresponds to one value of b or a set of values of b. In one example, b has C candidate values, and which one of the C candidate values to be selected to be the value of b is determined according to the size of a resource for transmitting the CSI and/or the code rate of the resource for transmitting the CSI. For example, the candidate value is selected for b such that K*b is less than and closest to the number of bits that can be transmitted by the resource for transmitting the CSI.

In one example, the elements in the second-type precoding information may be quantized in a uniform quantization manner. In an embodiment, in the case where the elements in the second-type precoding information are quantized in a uniform quantization method, the original element quantization bit for each element in the second-type precoding information is the same, and the target element quantization bit for each element is the same. It is assumed that the second-type precoding information includes K elements, the original element quantization bit is a bits, and the target element quantization bit is b bits. In this embodiment, when the terminal feeds the second-type precoding information back to the base station, each element is quantized using a bits, where a is an integer greater than 1, and then K*a bits are required to feed the second-type precoding information back. In one example, in the case where the second-type CSI report including the second-type precoding information and another CSI report collide, the number of the quantization bits for the second-type precoding information in the second-type CSI report needs to be reduced. The second-type precoding information includes K elements, each element is quantized using b bits before the second-type precoding information is fed back, where b is an integer greater than 1 and is less than a, and then K*b bits are required to feed the second-type precoding information back. By reducing the number of quantization bits for the second-type precoding information, the second-type precoding information is thereby transmitted over a colliding uplink resource. The base station receives the second-type precoding information with a reduced quantization precision and inputs the second-type precoding information into the AI module to restore the channel information. In one example, the terminal needs to feed the value b of the quantization bit back.

In one example, the elements in the second-type precoding information may be quantized in a non-uniform quantization manner. In an embodiment, in the case where the elements in the second-type precoding information are quantized in a non-uniform quantization method, the original element quantization bit for at least one element in the second-type precoding information is different from the original element quantization bit for any other element, and the target element quantization bit for at least one element is the same as the target element quantization bit for any other element. Assuming that the second-type precoding information includes K elements, when the terminal feeds the second-type precoding information back to the base station, the i-th element in the second-type precoding information is quantized using $a_i$ bits, where $a_i$ is an integer greater than 1, i = 1, ..., K, and the original element quantization bits for at least two elements are different from each other. Thus, $\sum_{i=1}^{K} a_i$ bits are required to feed the second-type precoding information back. In one example, in the case where the second-type CSI report including the second-type precoding information and another CSI report collide, the number of the quantization bits for the second-type precoding information in the second-type CSI report needs to be reduced. The second-type precoding information includes K elements, the i-th element is quantized using $b_i$ bits, where $b_i$ is an integer greater than 1, i = 1, ..., K, and the target element quantization bits for at least two elements are different from each other. Thus, $\sum_{i=1}^{K} b_i$ bits are required to feed the second-type precoding information back. By reducing the number of quantization bits for the second-type precoding information, the second-type precoding information is thereby transmitted over a colliding uplink resource. The base station receives the second-type precoding information with a reduced quantization precision and inputs the second-type precoding information into the AI module to restore the channel information. In one example, the K elements are grouped into C groups, and the elements in the i-th group are quantized using $b_i$ bits, where i = 1, ..., C, and C is an integer greater than 1 and less than K. In one example, the value of $b_i$ may be configured by the base station or may be defaulted, where i = 1, ..., C, and C is an integer greater than 1 and less than K. In one example, the value of $b_i$ may be determined according to the size of a resource for reporting the CSI, where i = 1, ..., C, and C is an integer greater than 1 and less than K. In one example, the value of $b_i$ may be determined according to the size of a resource for reporting the CSI and the code rate of the resource of the CSI, where i = 1, ..., C, and C is an integer greater than 1 and less than K. In one example, the value of $b_i$ may be determined according to the total number of bits of the CSIs corresponding to L colliding CSI reports, where i = 1, ..., C, and C is an integer greater than 1 and less than K. In one example, the value of $b_i$ may be determined according to the terminal itself and then fed back, where i = 1, ..., C, and C is an integer greater than 1 and less than K. In one example, the elements are sorted according to the element size, and the sorted elements are grouped into C groups. For example, the largest P elements are grouped into one group, and the other elements are grouped into one group. In one example, the elements are grouped into C groups according to the indexes corresponding to the elements, where the indexes of the elements in each group are consecutive, and the numbers of the indexes of elements between different groups are as uniform as possible. For example, when C is 2, the elements with the indexes of [1, 2, 3, ..., K/2] are grouped into one group, and the elements with the indexes of [K/2+1, K/2+2, ..., K] are grouped into one group. Of course, grouping may be performed in a similar manner when C is equal to any other value. In one example, K elements are grouped into C groups according to the element size. For example, the elements which are greater than a preset threshold T1 are grouped into one group, and the elements which are less than the preset threshold T1 are grouped into one group.

In an embodiment, when the transmission resources corresponding to multiple CSI reports collide, for example, when the transmission resources corresponding to L second-type CSI reports collide, where L is an integer greater than 1, the terminal still transmits at least one second-type CSI report among the L second-type CSI reports. At this point, the at least one second-type CSI report may be divided into C new second-type CSI reports (that is, the second-type CSI sub-reports in the foregoing embodiments). Since the corresponding CSI is split into C parts in the new second-type CSI reports, the number of transmission bits for transmitting the second-type precoding information each time can be reduced, so that at least one second-type CSI report among the L second-type CSI reports is transmitted over the transmission resource. The base station receives the second-type precoding information corresponding to at least one new second-type CSI report in each of C slots, forms one piece of integral second-type precoding information according to the second-type precoding information corresponding to each of the C new second-type CSI reports, and obtains a precoding matrix according to the integral second-type precoding information.

In some examples, when the terminal finds that the transmission resources for transmitting the second-type CSI reports collide, the terminal divides the CSI in each of the second-type CSI reports for which the transmission resources collide into C parts, each of which corresponds to one new second-type CSI report, and transmits at least one new second-type CSI report over the transmission resource. In one example, the C new second-type CSI reports have an associative relationship. For example, the C new second-type CSI reports have the same report index (that is, report ID). In one example, the C new second-type CSI reports have an associative relationship. For example, the C new second-type CSI reports have the same CSI configuration ID. In one example, the C new second-type CSI reports have an associative relationship. For example, the C new second-type CSI reports have the same higher-layer signaling ID. In one example, the C new second-type CSI reports have an associative relationship. For example, the C new second-type CSI reports are transmitted over the same transmission resource (for example, the same time-frequency resource element (RE)) in different slots. In one example, the first new second-type CSI report is transmitted in an n-th slot, and the k-th new second-type CSI report is reported in a slot n + (k - 1)*X, where k = 2, ..., C, C is a positive integer greater than 1, n is an integer, and X is a positive integer. In one example, the value of C is configured by the base station. In one example, the value of C is determined by the terminal. In one example, the value of C is determined according to the number of colliding second-type CSI reports. In one example, the value of C is determined according to the total number of transmission bits for the CSIs corresponding to the colliding second-type CSI reports. In one example, the value of C is determined according to the total number of transmission bits for the CSIs corresponding to the colliding second-type CSI reports and a code rate configured by the base station.

In an embodiment, when the transmission resources corresponding to multiple CSI reports collide, for example, when the transmission resources corresponding to L second-type CSI reports collide, where L is an integer greater than 1, the terminal still transmits at least one second-type CSI report among the L second-type CSI reports. In an embodiment, the second-type precoding information in the at least one second-type CSI report is grouped into C groups, the PV of each of the C groups of second-type precoding information is determined, and the PVs of the C groups of second-type precoding information are sorted in ascending order; the group of second-type precoding information with the largest transmission PV is dropped first, the group of second-type precoding information with the second largest transmission PV is dropped next, and so on, until the transmission resource meets the transmission condition (which is, for example, that the data code rate carried by the transmission resource is lower than a threshold). For example, when only k second-type precoding information groups need to be transmitted, the transmission resource meets the transmission condition, and the k second-type precoding information groups are transmitted in a new second-type CSI report, where k is a positive integer less than C. In one example, when the terminal finds that the transmission resources collide, the terminal divides the channel H into C channel groups, calculates the PVs of the C channel groups, and determines, according to the size of the transmission resource and/or a code rate, the number of channel groups that can be transmitted, for example, k channel groups. In one example, the second-type precoding information corresponding to each of the k channel groups is acquired, and the k pieces of second-type precoding information are taken as the second-type precoding information. In one example, the second-type precoding information corresponding to each of the k channel groups is acquired, and at least one new second-type CSI report including the second-type precoding information is transmitted over the transmission resource.

The base station receives the second-type precoding information corresponding to the at least one new second-type CSI report and obtains a precoding matrix according to the second-type precoding information corresponding to the at least one new second-type CSI report.

In one example, when the terminal finds that the transmission resources for transmitting the second-type precoding information collide, during the acquisition of the second-type precoding information, the terminal groups the channel H first and groups N elements in the channel H into C channel groups. In one specific example, the C channel groups each include the same number of elements. For example, each channel group includes ceil(N/C) elements, where ceil represents ceiling, and in the case where N/C is not an integer, some channel groups need to be filled to meet the condition that the number of elements is ceil(N/C). In one specific example, the number of elements included in at least one of the C channel groups is different from the number of elements included in any other channel group.

In one specific example, the channel H is grouped according to the transmission layer, that is, H is an eigenvector of an equivalent channel or a channel-correlated matrix, with the dimensions of a matrix of Nt*Ns. Then the columns of H are grouped into C groups, and each group includes at least one column of elements. For example, when Ns = C, each column of elements of H is one group. When Ns = 4 and C = 2, the first and second columns of elements of H are one group, and the third and fourth columns of elements are one group. Of course, other grouping manners may also be adopted, and the number of columns included in each group needs to be as equal as possible. For example, each group includes ceil(Ns/C) columns of elements. Nt, Ns and C herein are positive integers, and 1 < C ≤ Ns.

In one specific example, the channel H is grouped according to the transmitting port, and the port herein may be a physical antenna or a logical antenna. That is, H is a matrix of Nr*Nt, the columns of H are grouped into C groups, and each group includes at least one column of elements. For example, when Nt = C, each column of elements of H is one group. When Nt > 2 and C = 2, the first, second, ..., and Nt/2 columns of elements of H are one group, and the remaining columns of elements are one group. Of course, other grouping manners may also be adopted, and the number of columns included in each group needs to be as equal as possible. For example, each group includes ceil(Nt/C) columns of elements. Nr, Nt and C herein are positive integers, and 1 < C ≤ Nt.

In one specific example, the channel H is grouped according to the receiving port, and the port herein may be a physical antenna or a logical antenna. That is, H is a matrix of Nr*Nt, the rows of H are grouped into C groups, and each group includes at least one row of elements. For example, when Nr = C, each row of elements of H is one group. When Nt > 2 and C = 2, the first, second, ..., and Nt/2 rows of elements of H are one group, and the remaining rows of elements are one group. Of course, other grouping manners may also be adopted, and the number of rows included in each group needs to be as equal as possible. For example, each group includes ceil(Nr/C) rows of elements. Nr, Nt and C herein are positive integers, and 1 < C ≤ Nt.

In one specific example, the channel H is grouped according to at least one preset pattern, where the pattern may be configured by the base station or may be agreed upon, and each preset pattern includes at least one of the following: a time domain resource, a frequency domain resource or a spatial domain resource.

In one example, C second-type precoding information groups are obtained from the C channel groups, respectively, the PVs of the C second-type precoding information groups are calculated, and k second-type precoding information groups with the smallest PVs are transmitted, where C and k are positive integers and k < C.

In one example, the PVs of the C channel groups are calculated, and k channel groups that have the smallest PVs and that can be transmitted are selected. In one example, k second-type precoding information groups are obtained from the k channel groups with the smallest PVs, respectively, and the k second-type precoding information groups are combined to form one piece of second-type precoding information. In one specific example, one piece of second-type precoding information is obtained from the k channel groups with the smallest PVs, and the second-type precoding information is transmitted over the transmission resource, where C and k are positive integers and k < C.

In an embodiment, when the transmission resources corresponding to multiple CSI reports collide, for example, when the transmission resources corresponding to L second-type CSI reports collide, where L is an integer greater than 1, the terminal still transmits at least one second-type CSI report among the L second-type CSI reports. The second-type precoding information corresponding to the at least one second-type CSI report is designed as a nesting pattern with C levels, that is, the second-type precoding information includes C parts, each of which corresponds to nested bits of one level. The C parts are p1, p2, ..., and pC, and each part includes c bits. In one example, pC is preferentially dropped, pC - 1 is dropped next until the bits in all parts to be transmitted meet the transmission requirement of the transmission resource. For example, if the transmission requirement of the transmission resource is met at the time of transmission of k parts, p1, p2, ..., and pk are formed into the second-type precoding information. The at least one second-type CSI report among the L second-type CSI reports is transmitted over the transmission resource. The base station receives the second-type precoding information corresponding to the at least one second-type CSI report and obtains a precoding matrix according to the second-type precoding information corresponding to the at least one second-type CSI report.

In one example, the terminal obtains a channel H, the channel H is processed by the encoding module of an autoencoder to obtain second-type precoding information, and the second-type precoding information includes L elements. Each of the L elements is quantized using e bits. For example, the i-th element is quantized as [bi,i, $b_{i,2}$, ...,

$b_{i,e}$], where $b_{i,i}$, $b_{i,2}$, ..., $b_{i,e}$ are expressed as binary values, and for example, when e = 4, their values are [1, 1, 1, 0], [0, 1, 1, 0] or the like.

In one example, one manner of nesting and quantizing the second-type precoding information includes: the second-type precoding information including L elements is quantized, where the total number of quantization bits is L*e, and the second-type precoding information is divided into e parts, with the k-th bit of the i-th element taken as the i-th element of the k-th part pk, where for example, pk is [$b_{1,k}$, $b_{2,k}$, ..., $b_{L,k}$], where k = 1, ..., e, and i = 1, ..., L.

In an embodiment, FIG. 3 is a block diagram of an information transmission apparatus according to an embodiment of the present application. This embodiment is applied to a first communication node. As shown in FIG. 3, this embodiment includes a determination module 310 and a transmission module 320.

The determination module 310 is configured to determine the PVs of L CSI reports, where the L CSI reports include L1 first-type CSI reports and L2 second-type CSI reports, L, L1 and L2 are all integers, L1 is greater than or equal to 0, L2 is greater than 0, and L = L1 + L2.

The transmission module 320 is configured to transmit information in at least one CSI report among the L CSI reports according to the PVs.

In an embodiment, the determination module 310 is configured to determine the PVs of the L CSI reports according to at least one of a first initial parameter, a second initial parameter, a third initial parameter or a fourth initial parameter.

In an embodiment, the first initial parameter is a non-negative integer less than or equal to 7, and the meaning corresponding to the value includes at least one of the following: in the case where the first initial parameter is less than or equal to 3, it is indicated that the value corresponds to a first-type CSI report; in the case where the first initial parameter is greater than 3, it is indicated that the value corresponds to a second-type CSI report.

In an embodiment, the second initial parameter is a non-negative integer less than or equal to 2, and the meaning corresponding to the value includes at least one of the following: in the case where the second initial parameter is less than or equal to 1, it is indicated that the value corresponds to a first-type CSI report; in the case where the second initial parameter is greater than 1, it is indicated that the value corresponds to a second-type CSI report.

In an embodiment, the third initial parameter is a non-negative integer less than $2N_{cell}$, and the meaning corresponding to the value includes one of the following: in the case where the value of the third initial parameter is less than $N_{cell}$, it is indicated that the value corresponds to a first-type CSI report; in the case where the value of the third initial parameter is greater than or equal to $N_{cell}$, it is indicated that the value corresponds to a second-type CSI report, where $N_{cell}$ represents the maximum number of serving cells.

In an embodiment, the value of the fourth initial parameter is a non-negative integer less than $2M_s$, and the meaning corresponding to the value includes one of the following: in the case where the value of the fourth initial parameter is less than $M_s$, it is indicated that the value corresponds to a first-type CSI report; in the case where the value of the fourth initial parameter is greater than or equal to $M_s$, it is indicated that the value corresponds to a second-type CSI report, where $2M_s$ represents the maximum number of reports.

In an embodiment, the determination module 310 is configured to determine the PVs of the L CSI reports according to at least one of a first target parameter, a second target parameter, a third target parameter or a fourth target parameter.

In an embodiment, the first target parameter is determined according to a first initial parameter and a first preset offset, the second target parameter is determined according to a second initial parameter and a second preset offset, the third target parameter is determined according to a third initial parameter and a third preset offset, and the fourth target parameter is determined according to a fourth initial parameter and a fourth preset offset; where the first initial parameter is a non-negative integer less than or equal to 3, and the value of the first preset offset is 0 or a positive integer greater than or equal to 4; the second initial parameter is a non-negative integer less than or equal to 1, and the value of the second preset offset is 0 or a positive integer greater than or equal to 2; the third initial parameter is a non-negative integer less than or equal to the maximum number $N_{cell}$ of serving cells, and the value of the third preset offset is 0 or a positive integer greater than or equal to $N_{cell}$; the fourth initial parameter is a non-negative integer less than or equal to the maximum number $M_s$ of CSI reports, and the value of the fourth preset offset is 0 or a positive integer greater than or equal to $M_s$.

In an embodiment, the information in the at least one CSI report includes initial second-type precoding information, and the transmission module 320 is configured to determine the target second-type precoding information according to a preset rule and the initial second-type precoding information.

In an embodiment, the operation in which the target second-type precoding information is determined according to the preset rule and the initial second-type precoding information includes:

a target element quantization bit is determined; and

the initial second-type precoding information is quantized according to the target element quantization bit to obtain the target second-type precoding information, where the target element quantization bit is less than an original element quantization bit, and the initial second-type precoding information and the target second-type precoding information are both the second-type precoding information.

In an embodiment, the operation in which the target element quantization bit is determined includes one of the following:

the target element quantization bit is determined according to the size of a transmission resource for carrying a CSI report;

the target element quantization bit is determined according to the size of a transmission resource for carrying a CSI report and a code rate corresponding to the transmission resource;

the target element quantization bit is determined according to the size of a remaining transmission resource for carrying a CSI report; or

the target element quantization bit is determined according to the size of a remaining transmission resource for carrying a CSI report and a code rate corresponding to a transmission resource.

In an embodiment, the relationship between the target element quantization bit for each element in the target second-type precoding information includes one of the following: the target element quantization bit for each element in the target second-type precoding information is the same, the target element quantization bit for at least one element in the target second-type precoding information is less than the original element quantization bit, or the target element quantization bits for at least two elements in the target second-type precoding information are different from each other.

In an embodiment, the operation in which the target second-type precoding information is determined according to the preset rule and the initial second-type precoding information includes:

elements of the initial second-type precoding information are grouped according to a first preset grouping manner to obtain C element groups; and

elements in a corresponding element group are quantized according to the target element quantization bit corresponding to each element group, and the target second-type precoding information is determined according to C quantized element groups;

where the target element quantization bit corresponding to at least one element group is less than the original element quantization bit, and C is a positive integer greater than 1.

In an embodiment, the first preset grouping manner includes one of the following: grouping is performed according to an element index, grouping is performed according to an element size, or grouping is performed according to a preset threshold.

In an embodiment, the manner of determining the target element quantization bit corresponding to each element group includes one of the following: the target element quantization bit corresponding to each element group is determined according to a received first signaling; the target element quantization bit corresponding to each element group is defaulted; the target element quantization bit corresponding to each element group is determined according to the number of elements of the initial second-type precoding information and the size of a remaining transmission resource; or the target element quantization bit corresponding to each element group is determined by the first communication node.

In an embodiment, the operation in which the target second-type precoding information is determined according to the preset rule and the initial second-type precoding information includes:

the initial second-type precoding information is grouped according to a first preset grouping manner or a second preset grouping manner to obtain C corresponding second-type precoding information groups; and

the C second-type precoding information groups are transmitted through Lc CSI reports, where at least one second-type precoding information group corresponding to an i-th CSI report is target second-type precoding information of the i-th CSI report, $i = 1, ..., Lc$, and Lc is an integer greater than 1 and less than or equal to C.

In an embodiment, the relationship between the Lc CSI reports corresponding to the C second-type precoding information groups includes one of the following: the Lc CSI reports have the same first channel report index; the Lc CSI reports have the same first channel resource location; the Lc CSI reports have the same second channel report index; the Lc CSI reports have the same second channel resource location; or the Lc CSI reports have the same uplink control resource identifier.

In an embodiment, the operation in which the C second-type precoding information groups are transmitted through the Lc CSI reports includes: a k-th CSI report is transmitted in a slot n + (k - 1)*X, where n is the transmission slot of a first CSI report, the slot interval X is a positive integer greater than or equal to 1, k = 0, ..., Lc, and Lc is an integer greater than 1 and less than or equal to C.

In an embodiment, the number Lc of the CSI reports used for transmitting the C second-type precoding information groups is determined according to one of the following manners: Lc is determined according to a received second signaling; Lc is determined according to the number of colliding second-type CSI reports among the L CSI reports; Lc is determined according to the total number of transmission bits corresponding to colliding second-type CSI reports among the L CSI reports; Lc is determined according to the total number of transmission bits corresponding to colliding second-type CSI reports among the L CSI reports and a code rate; or Lc is determined according to the size of the transmission resource used for transmitting the second-type CSI report.

In an embodiment, the operation in which the target second-type precoding information is determined according to the preset rule and the initial second-type precoding information includes:

channels corresponding to a second-type CSI report are grouped according to a second preset grouping manner to obtain C corresponding channel groups;

C second-type precoding information groups are obtained according to the C channel groups; and

at least one second-type precoding information group is selected from the C second-type precoding information groups according to the PVs of the C second-type precoding information groups and then transmitted to determine the target second-type precoding information.

In an embodiment, the operation in which the target second-type precoding information is determined according to the preset rule and the initial second-type precoding information includes:

the second-type precoding information in a second-type CSI report is grouped according to a first preset grouping manner to obtain C corresponding second-type precoding information groups; and

at least one second-type precoding information group is selected from the C second-type precoding information groups according to the PVs of the C second-type precoding information groups and then transmitted to determine the target second-type precoding information.

In an embodiment, the second preset grouping manner includes at least one of the following: grouping is performed according to a transmission layer; grouping is performed according to a transmitting port and/or a receiving port; grouping is performed according to a sub-band; grouping is performed according to a data stream or a codeword; grouping is performed according to a time domain power delay; grouping is performed according to a time domain impulse response; or grouping is performed according to at least one preset pattern.

Each preset pattern includes at least one of the following: a time domain resource, a frequency domain resource or a spatial domain resource.

In an embodiment, the operation in which the target second-type precoding information is determined according to the preset rule and the initial second-type precoding information includes:

the initial second-type precoding information is quantized according to a nesting pattern to obtain nested quantized initial second-type precoding information; and

at least one quantization bit for the nested quantized initial second-type precoding information is selected as the target second-type precoding information.

The information transmission apparatus provided in this embodiment is configured to implement the information transmission method applied to the first communication node in the embodiment shown in FIG. 1. The information transmission apparatus provided in this embodiment has the similar implementation principles and technical effects, and the details are not repeated here.

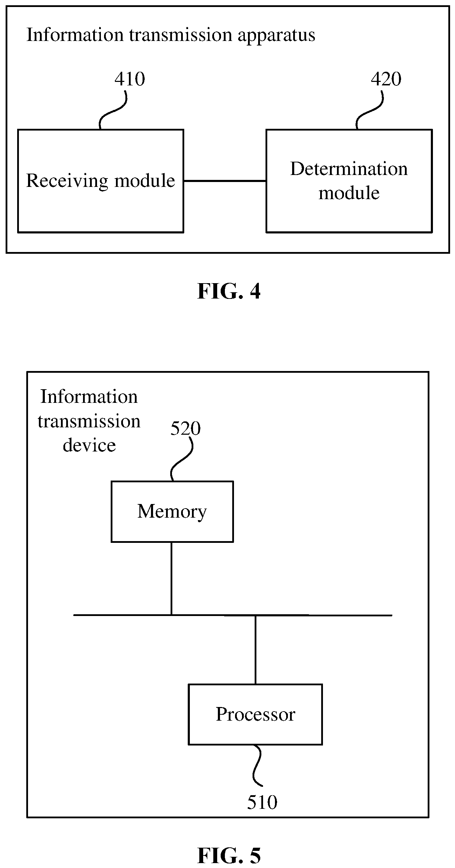

In an embodiment, FIG. 4 is a block diagram of another information transmission apparatus according to an embodiment of the present application. This embodiment is applied to a second communication node. As shown in FIG. 4, this embodiment includes a receiving module 410 and a determination module 420.

The receiving module 410 is configured to receive information in at least one CSI report sent by a first communication node, where the information in the at least one CSI report includes target second-type precoding information.

The determination module 420 is configured to obtain first channel information according to the target second-type precoding information.

In an embodiment, the PVs of the CSI reports are determined in the following manner: the PV of each CSI report is determined according to at least one of a first initial parameter, a second initial parameter, a third initial parameter or a fourth initial parameter.

In an embodiment, the first initial parameter is a non-negative integer less than or equal to 7, and the meaning corresponding to the value includes at least one of the following: in the case where the first initial parameter is less than or equal to 3, it is indicated that the value corresponds to a first-type CSI report; in the case where the first initial parameter is greater than 3, it is indicated that the value corresponds to a second-type CSI report.

In an embodiment, the second initial parameter is a non-negative integer less than or equal to 2, and the meaning corresponding to the value includes at least one of the following: in the case where the second initial parameter is less than or equal to 1, it is indicated that the value corresponds to a first-type CSI report; in the case where the second initial parameter is greater than 1, it is indicated that the value corresponds to a second-type CSI report.

In an embodiment, the third initial parameter is a non-negative integer less than $2N_{cell}$, and the meaning corresponding to the value includes one of the following: in the case where the value of the third initial parameter is less than $N_{cell}$, it is indicated that the value corresponds to a first-type CSI report; in the case where the value of the third initial parameter is greater than or equal to $N_{cell}$, it is indicated that the value corresponds to a second-type CSI report, where $N_{cell}$ represents the maximum number of serving cells.

In an embodiment, the value of the fourth initial parameter is a non-negative integer less than $2M_s$, and the meaning corresponding to the value includes one of the following: in the case where the value of the fourth initial parameter is less than $M_s$, it is indicated that the value corresponds to a first-type CSI report; in the case where the value of the fourth initial parameter is greater than or equal to $M_s$, it is indicated that the value corresponds to a second-type CSI report, where $2M_s$ represents the maximum number of reports.

In an embodiment, the PV of the CSI report is determined in the following manner: the PVs of the L CSI reports are determined according to at least one of a first target parameter, a second target parameter, a third target parameter or a fourth target parameter.

In an embodiment, the first target parameter is determined according to a first initial parameter and a first preset offset, the second target parameter is determined according to a second initial parameter and a second preset offset, the third target parameter is determined according to a third initial parameter and a third preset offset, and the fourth target parameter is determined according to a fourth initial parameter and a fourth preset offset; where the first initial parameter is a non-negative integer less than or equal to 3, and the value of the first preset offset is 0 or a positive integer greater than or equal to 4; the second initial parameter is a non-negative integer less than or equal to 1, and the value of the second preset offset is 0 or a positive integer greater than or equal to 2; the third initial parameter is a non-negative integer less than or equal to the maximum number $N_{cell}$ of serving cells, and the value of the third preset offset is 0 or a positive integer greater than or equal to $N_{cell}$; the fourth initial parameter is a non-negative integer less than or equal to the maximum number $M_s$ of CSI reports, and the value of the fourth preset offset is 0 or a positive integer greater than or equal to $M_s$.

In an embodiment, the information in the at least one CSI report includes initial second-type precoding information; and the target second-type precoding information is determined by the first communication node according to a preset rule and the initial second-type precoding information.

In an embodiment, the operation in which the target second-type precoding information is determined by the first communication node according to the preset rule and the initial second-type precoding information includes:

a target element quantization bit is determined by the first communication node; and

the initial second-type precoding information is quantized by the first communication node according to the target element quantization bit to obtain the target second-type precoding information, where the target element quantization bit is less than an original element quantization bit, and the initial second-type precoding information and the target second-type precoding information are both the second-type precoding information.

In an embodiment, the operation in which the target element quantization bit is determined by the first communication node includes one of the following:

the target element quantization bit is determined by the first communication node according to the size of a transmission resource for carrying a CSI report;

the target element quantization bit is determined by the first communication node according to the size of a transmission resource for carrying a CSI report and a code rate corresponding to the transmission resource;

the target element quantization bit is determined by the first communication node according to the size of a remaining transmission resource for carrying a CSI report; or

the target element quantization bit is determined by the first communication node according to the size of a remaining transmission resource for carrying a CSI report and a code rate corresponding to a transmission resource.

In an embodiment, the relationship between the target element quantization bit for each element in the target second-type precoding information includes one of the following: the target element quantization bit for each element in the target second-type precoding information is the same, the target element quantization bit for at least one element in the target second-type precoding information is less than the original element quantization bit, or the target element quantization bits for at least two elements in the target second-type precoding information are different from each other.

In an embodiment, the operation in which the target second-type precoding information is determined by the first communication node according to the preset rule and the initial second-type precoding information includes:

elements of the initial second-type precoding information are grouped by the first communication node according to a first preset grouping manner to obtain C element groups; and

elements in a corresponding element group are quantized by the first communication node according to the target element quantization bit corresponding to each element group, and the target second-type precoding information is determined according to C quantized element groups;

where the target element quantization bit corresponding to at least one element group is less than the original element quantization bit, and C is a positive integer greater than 1.

In an embodiment, the first preset grouping manner includes one of the following: grouping is performed according to an element index, grouping is performed according to an element size, or grouping is performed according to a preset threshold.

In an embodiment, the manner of determining the target element quantization bit corresponding to each element group includes one of the following: the target element quantization bit corresponding to each element group is determined according to a received first signaling; the target element quantization bit corresponding to each element group is defaulted; the target element quantization bit corresponding to each element group is determined according to the number of elements of the initial second-type precoding information and the size of a remaining transmission resource; or the target element quantization bit corresponding to each element group is determined by the first communication node.

In an embodiment, the operation in which the target second-type precoding information is determined by the first communication node according to the preset rule and the initial second-type precoding information includes:

the initial second-type precoding information is grouped by the first communication node according to a first preset grouping manner or a second preset grouping manner to obtain C corresponding second-type precoding information groups; and

the C second-type precoding information groups are transmitted through Lc CSI reports, where at least one second-type precoding information group corresponding to an i-th CSI report is target second-type precoding information of the i-th CSI report, i = 1, ..., Lc, and Lc is an integer greater than 1 and less than or equal to C.

In an embodiment, the relationship between the Lc CSI reports corresponding to the C second-type precoding information groups includes one of the following: the Lc CSI reports have the same first channel report index; the Lc CSI reports have the same first channel resource location; the Lc CSI reports have the same second channel report index; the Lc CSI reports have the same second channel resource location; or the Lc CSI reports have the same uplink control resource identifier.

In an embodiment, the operation in which the C second-type precoding information groups are transmitted by the first communication node through the LC CSI reports includes: a k-th second-type CSI sub-report is transmitted in a slot n + (k - 1)*X, where n is the transmission slot of a first second-type CSI sub-report, the slot interval X is a positive integer greater than or equal to 1, k = 0, ..., LC, and LC is an integer greater than 1 and less than or equal to C.

In an embodiment, the number Lc of the CSI reports used for transmitting the C second-type precoding information groups is determined according to one of the following manners: Lc is determined according to a received second signaling; Lc is determined according to the number of colliding second-type CSI reports among the L CSI reports; Lc is determined according to the total number of transmission bits corresponding to colliding second-type CSI reports among the L CSI reports; Lc is determined according to the total number of transmission bits corresponding to colliding second-type CSI reports among the L CSI reports and a code rate; or Lc is determined according to the size of the transmission resource used for transmitting the second-type CSI report.

In an embodiment, the operation in which the target second-type precoding information is determined by the first communication node according to the preset rule and the initial second-type precoding information includes:

channels corresponding to a second-type CSI report are grouped by the first communication node according to a second preset grouping manner to obtain C corresponding channel groups;

C second-type precoding information groups are obtained by the first communication node according to the C channel groups; and

at least one second-type precoding information group is selected by the first communication node from the C second-type precoding information groups according to the PVs of the C second-type precoding information groups to determine the target second-type precoding information.

In an embodiment, the operation in which the target second-type precoding information is determined by the first communication node according to the preset rule and the initial second-type precoding information includes:

the initial second-type precoding information is grouped by the first communication node according to a first preset grouping manner to obtain C corresponding second-type precoding information groups; and

at least one second-type precoding information group is selected by the first communication node from the C second-type precoding information groups according to the PVs of the C second-type precoding information groups to determine the target second-type precoding information.

In an embodiment, the second preset grouping manner includes at least one of the following: grouping is performed according to a transmission layer; grouping is performed according to a transmitting port and/or a receiving port; grouping is performed according to a sub-band; grouping is performed according to a data stream or a codeword; grouping is performed according to a time domain power delay; grouping is performed according to a time domain impulse response; or grouping is performed according to at least one preset pattern.

Each preset pattern includes at least one of the following: a time domain resource, a frequency domain resource or a spatial domain resource.

In an embodiment, the operation in which the target second-type precoding information is determined by the first communication node according to the preset rule and the initial second-type precoding information includes:

the initial second-type precoding information is quantized by the first communication node according to a nesting pattern to obtain nested quantized initial second-type precoding information; and
at least one quantization bit for the nested quantized initial second-type precoding information is selected by the first communication node as the target second-type precoding information.

The information transmission apparatus provided in this embodiment is configured to implement the information transmission method applied to the second communication node in the embodiment shown in FIG. 2. The information transmission apparatus provided in this embodiment has the similar implementation principles and technical effects, and the details are not repeated here.

In an embodiment, FIG. 5 is a structure diagram of an information transmission device according to an embodiment of the present application. As shown in FIG. 5, the device provided in the present application includes a processor 510 and a memory 520. The number of processors 510 in the device may be one or more, and one processor 510 is illustrated in FIG. 5. The number of memories 520 in the device may be one or more, and one memory 520 is illustrated in FIG. 5. The processor 510 and memory 520 of the device are connected via a bus or in other manners, and the connection via a bus is illustrated in FIG. 5. In this embodiment, the device may be a first communication node. For example, the first communication node may be a terminal-side device (for example, a UE).

As a computer-readable storage medium, the memory 520 may be configured to store software programs, and computer-executable programs and modules, such as program instructions/modules (for example, the determination module 310 and the transmission module 320 in the information transmission apparatus) corresponding to the device according to any embodiment of the present application. The memory 520 may include a program storage region and a data storage region. The program storage region may store an operating system and an application program required by at least one function. The data storage region may store data created according to the use of the device. In addition, the memory 520 may include a high-speed random-access memory and may further include a non-volatile memory, such as at least one disk memory, a flash memory or another non-volatile solid-state memory. In some examples, the memory 520 may further include memories remotely disposed relative to the processor 510, and these remote memories may be connected to the device via a network. Examples of the preceding network include, but are not limited to, the Internet, an intranet, a local area network, a mobile communication network, and a combination thereof.

When serving as the first communication node, the information transmission device may be configured to perform the information transmission method applied to the first communication node in any previous embodiment and has corresponding functions and effects.

When serving as the second communication node, the information transmission device may be configured to perform the information transmission method applied to the second communication node in any previous embodiment and has corresponding functions and effects.

The embodiments of the present application further provide a storage medium including computer-executable instructions which, when executed by a computer processor, are configured to execute an information transmission method applied to a first communication node. The method includes: PVs of L CSI reports are determined, where the L CSI reports include L1 first-type CSI reports and L2 second-type CSI reports, L, L1 and L2 are all integers, L1 is greater than or equal to 0, L2 is greater than 0, and L = L1 + L2; and information in at least one CSI report among the L CSI reports is transmitted according to the PVs.

The embodiments of the present application further provide a storage medium including computer-executable instructions which, when executed by a computer processor, are configured to execute an information transmission method applied to a second communication node. The method includes: information in at least one CSI report sent by a first communication node is received, where the information in the at least one CSI report includes target second-type precoding information; and first channel information is obtained according to the target second-type precoding information.

It is to be understood by those skilled in the art that the term "user equipment" encompasses any suitable type of wireless user device, for example, a mobile phone, a portable data processing apparatus, a portable web browser, or a vehicle-mounted mobile station.

Generally speaking, the embodiments of the present application may be implemented in hardware or special-purpose circuits, software, logic or any combination thereof. For example, some aspects may be implemented in hardware while other aspects may be implemented in firmware or software executable by a controller, a microprocessor or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, digital signal processing (DSP), an application-specific integrated circuit (ASIC), a field-programmable gate array (FPGA), and a processor based on a multi-core processor architecture.

The preceding are only preferred embodiments of the present application and are not intended to limit the present application. For those skilled in the art, the present application may have various modifications and variations. Any modifications, equivalent substitutions, improvements and the like made within the spirit and principle of the present application should fall within the scope of the present application.

**Claims**

1. An information transmission method, applied to a first communication node and comprising:

    determining priority values of L channel state information (CSI) reports, wherein the L CSI reports comprise L1 first-type CSI reports and L2 second-type CSI reports, L, L1 and L2 are all integers, L1 is greater than or equal to 0, L2 is greater than 0, and L = L1 + L2; and
transmitting information in at least one CSI report among the L CSI reports according to the priority values.

2. The method of claim 1, wherein determining the priority values of the L CSI reports comprises:
determining the priority values of the L CSI reports according to at least one of a first initial parameter, a second initial parameter, a third initial parameter or a fourth initial parameter.

3. The method of claim 2, wherein a value of the first initial parameter is a non-negative integer less than or equal to 7, and a meaning corresponding to the value comprises at least one of the following: the value of the first initial parameter being less than or equal to 3 indicates that the value corresponds to the first-type CSI report, or the value of the first initial parameter being greater than 3 indicates that the value corresponds to the second-type CSI report.

4. The method of claim 2, wherein the value of the second initial parameter is a non-negative integer less than or equal to 2, and a meaning corresponding to the value comprises at least one of the following: the value of the second initial parameter being less than or equal to 1 indicates that the value corresponds to the first-type CSI report, or the second initial parameter being greater than 1 indicates that the value corresponds to the second-type CSI report.

5. The method of claim 2, wherein the value of the third initial parameter is a non-negative integer less than $2N_{cell}$, and a meaning corresponding to the value comprises one of the following: the value of the third initial parameter being less than $N_{cell}$ indicates that the value corresponds to the first-type CSI report, or the value of the third initial parameter being greater than or equal to $N_{cell}$ indicates that the value corresponds to the second-type CSI report; wherein $N_{cell}$ represents a maximum number of serving cells.

6. The method of claim 2, wherein a value of the fourth initial parameter is a non-negative integer less than $2M_s$, and a meaning corresponding to the value comprises one of the following: the value of the fourth initial parameter being less than $M_s$ indicates that the value corresponds to the first-type CSI report, or the value of the fourth initial parameter being greater than or equal to $M_s$ indicates that the value corresponds to the second-type CSI report, wherein $2M_s$ represents a maximum number of reports.

7. The method of claim 1, wherein determining the priority values of the L CSI reports comprises:
determining the priority values of the L CSI reports according to at least one of a first target parameter, a second target parameter, a third target parameter or a fourth target parameter.

8. The method of claim 7, comprising at least one of the following:

determining the first target parameter according to a first initial parameter and a first preset offset, wherein the first initial parameter is a non-negative integer less than or equal to 3, and a value of the first preset offset is 0 or a positive integer greater than or equal to 4;
determining the second target parameter according to a second initial parameter and a second preset offset, wherein the second initial parameter is a non-negative integer less than or equal to 1, and a value of the second preset offset is 0 or a positive integer greater than or equal to 2;
determining the third target parameter according to a third initial parameter and a third preset offset, wherein the third initial parameter is a non-negative integer less than or equal to a maximum number $N_{cell}$ of serving cells, and a value of the third preset offset is 0 or a positive integer greater than or equal to $N_{cell}$; or
determining the fourth target parameter according to a fourth initial parameter and a fourth preset offset, wherein the fourth initial parameter is a non-negative integer less than or equal to a maximum number $M_s$ of CSI reports, and a value of the fourth preset offset is 0 or a positive integer greater than or equal to $M_s$.

9. The method of claim 1, wherein the information in the at least one CSI report comprises initial second-type precoding information; and transmitting the information in the at least one CSI report among the L CSI reports according to the priority values comprises: determining target second-type precoding information according to a preset rule and the initial second-type precoding information.

10. The method of claim 9, wherein determining the target second-type precoding information according to the preset rule and the initial second-type precoding information comprises:

determining a target element quantization bit; and

quantizing the initial second-type precoding information according to the target element quantization bit to obtain the target second-type precoding information, wherein the target element quantization bit is less than an original element quantization bit.

11. The method of claim 10, wherein determining the target element quantization bit comprises one of the following:

determining the target element quantization bit according to a size of a transmission resource for carrying a CSI report;
determining the target element quantization bit according to a size of a transmission resource for carrying a CSI report and a code rate corresponding to the transmission resource;
determining the target element quantization bit according to a size of a remaining transmission resource for carrying a CSI report; or
determining the target element quantization bit according to a size of a remaining transmission resource for carrying a CSI report and a code rate corresponding to a transmission resource.

12. The method of claim 10, wherein a relationship between a target element quantization bit of each element in the target second-type precoding information comprises one of the following: the target element quantization bit of each element in the target second-type precoding information is same; a target element quantization bit of at least one element in the target second-type precoding information is less than the original element quantization bit; or target element quantization bits of at least two elements in the target second-type precoding information are different from each other.

13. The method of claim 9, wherein determining the target second-type precoding information according to the preset rule and the initial second-type precoding information comprises:

grouping elements of the initial second-type precoding information according to a first preset grouping manner to obtain C element groups; and
quantizing, according to a target element quantization bit corresponding to each element group of the C element groups, elements in a corresponding element group, and determining the target second-type precoding information according to C quantized element groups;
wherein a target element quantization bit corresponding to at least one element group of the C element groups is less than an original element quantization bit, and C is a positive integer greater than 1.

14. The method of claim 13, wherein the first preset grouping manner comprises one of the following: grouping is performed according to an element index; grouping is performed according to an element size; or grouping is performed according to a preset threshold.

15. The method of claim 13, wherein a manner of determining the target element quantization bit corresponding to the each element group comprises one of the following: determining the target element quantization bit corresponding to the each element group according to a received first signaling; the target element quantization bit corresponding to the each element group being defaulted; determining the target element quantization bit corresponding to the each element group according to a number of elements of the initial second-type precoding information and a size of a remaining transmission resource; or determining the target element quantization bit corresponding to the each element group by the first communication node.

16. The method of claim 9, wherein determining the target second-type precoding information according to the preset rule and the initial second-type precoding information comprises:

grouping the initial second-type precoding information according to a first preset grouping manner or a second preset grouping manner to obtain C corresponding second-type precoding information groups; and
transmitting the C second-type precoding information groups through Lc CSI reports, wherein at least one second-type precoding information group corresponding to an i-th CSI report is target second-type precoding information of the i-th CSI report, i = 1, ..., Lc, and Lc is an integer greater than 1 and less than or equal to C.

17. The method of claim 16, wherein a relationship between the Lc CSI reports corresponding to the C second-type precoding information groups comprises one of the following: the Lc CSI reports have a same first channel report index; the Lc CSI reports have a same first channel resource location; the Lc CSI reports have a same second channel report index; the Lc CSI reports have a same second channel resource location; or the Lc CSI reports have a same uplink control resource identifier.

**18.** The method of claim 16, wherein transmitting the C second-type precoding information groups through the Lc CSI reports comprises: transmitting a k-th CSI report over a slot n + (k - 1)*X, wherein n is a transmission slot of a first CSI report, a slot interval X is a positive integer greater than or equal to 1, k = 1, ..., Lc, and Lc is an integer greater than 1 and less than or equal to C.

**19.** The method of claim 16, wherein a number Lc of the CSI reports used for transmitting the C second-type precoding information groups is determined according to one of the following manners: Lc is determined according to a received second signaling; Lc is determined according to a number of colliding second-type CSI reports among the L CSI reports; Lc is determined according to a total number of transmission bits corresponding to colliding second-type CSI reports among the L CSI reports; Lc is determined according to a total number of transmission bits corresponding to colliding second-type CSI reports among the L CSI reports and a code rate; or Lc is determined according to a size of a transmission resource used for transmitting the second-type CSI report.

**20.** The method of claim 9, wherein determining the target second-type precoding information according to the preset rule and the initial second-type precoding information comprises:

grouping channels corresponding to the initial second-type precoding information according to a second preset grouping manner to obtain C channel groups;
obtaining C second-type precoding information groups according to the C channel groups; and
selecting at least one second-type precoding information group from the C second-type precoding information groups according to priority values of the C second-type precoding information groups to determine the target second-type precoding information.

**21.** The method of claim 9, wherein determining the target second-type precoding information according to the preset rule and the initial second-type precoding information comprises:

grouping the initial second-type precoding information according to a first preset grouping manner to obtain C second-type precoding information groups; and
selecting at least one second-type precoding information group from the C second-type precoding information groups according to priority values of the C second-type precoding information groups to determine the target second-type precoding information.

**22.** The method of claim 20, wherein the second preset grouping manner comprises at least one of the following: grouping is performed according to a transmission layer; grouping is performed according to at least one of a transmitting port or a receiving port; grouping is performed according to a sub-band; grouping is performed according to a data stream or a codeword; grouping is performed according to a time domain power delay; grouping is performed according to a time domain impulse response; or grouping is performed according to a preset pattern;
wherein the preset pattern comprises at least one of: a time domain resource, a frequency domain resource or a spatial domain resource.

**23.** The method of claim 9, wherein determining the target second-type precoding information according to the preset rule and the initial second-type precoding information comprises:

quantizing the initial second-type precoding information according to a nesting pattern to obtain a nested quantized initial second-type precoding information; and
selecting at least one quantization bit of the nested quantized initial second-type precoding information as the target second-type precoding information.

**24.** An information transmission method, applied to a second communication node and comprising:

receiving information in at least one channel state information (CSI) report sent by a first communication node, wherein the information in the at least one CSI report comprises target second-type precoding information; and
obtaining first channel information according to the target second-type precoding information.

**25.** An information transmission device, comprising a memory and one or more processors;

wherein the memory is configured to store one or more programs;
the one or more programs, when executed by the one or more processors, cause the one or more processors to implement the information transmission method of any one of claims 1 to 23 or the information transmission method of claim 24.

26. A storage medium storing a computer program which, when executed by a processor, causes the processor to implement the information transmission method of any one of claims 1 to 23 or the information transmission method of claim 24.

| Determine priority values of L CSI reports | ⌐∿ S110 |

| Transmit information in at least one CSI report among the L CSI reports according to the priority values | ⌐∿ S120 |

**FIG. 1**

| Receive information in at least one CSI report sent by a first communication node | ⌐∿ S210 |

| Obtain first channel information according to target second-type precoding information | ⌐∿ S220 |

**FIG. 2**

Information transmission apparatus

310                                      320

| Determination module | — | Transmission module |

**FIG. 3**

Information transmission apparatus

410

420

Receiving module

Determination module

**FIG. 4**

Information transmission device

520

Memory

Processor

510

**FIG. 5**

## INTERNATIONAL SEARCH REPORT

| International application No. |
|---|
| **PCT/CN2023/100375** |

**A.  CLASSIFICATION OF SUBJECT MATTER**

H04L 1/00(2006.01)i;  H04W24/10(2009.01)i

According to International Patent Classification (IPC) or to both national classification and IPC

**B.  FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI, 3GPP: 人工智能, 机器学习, 深度学习, 信道状态信息, 报告, 上报, 类型, 优先级, 冲突, 重叠, 重合, 预编码, 码本, 非码本, Artificial Intelligence, AI, Machine Learning, ML, Deep Learning, DL, channel status information, CSI, report, priority, conflict, overlap, pre-coding, codebook, non-codebook

**C.  DOCUMENTS CONSIDERED TO BE RELEVANT**

| Category* | Citation of document, with indication, where appropriate, of the relevant passages | Relevant to claim No. |
|---|---|---|
| PX | GOOGLE. "R1-2300398 On Enhancement of AI/ML based CSI" *3GPP TSG RAN WG1 #112*, 03 March 2023 (2023-03-03), sections 1-3 | 1-9, 24-26 |
| X | CN 113302968 A (GUANGDONG OPPO MOBILE COMMUNICATIONS CO., LTD.) 24 August 2021 (2021-08-24) description, paragraphs 0037-0143 and 0188-0216 | 1-9, 24-26 |
| X | CN 103107866 A (ZTE CORP.) 15 May 2013 (2013-05-15) description, paragraphs 0031-0095 | 1-9, 24-26 |
| A | US 2021014711 A1 (APPLE INC.) 14 January 2021 (2021-01-14) entire document | 1-26 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2023** | **22 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| | INTERNATIONAL SEARCH REPORT<br>Information on patent family members | | International application No.<br><br>**PCT/CN2023/100375** | | |
|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 113302968 | A | 24 August 2021 | US | 2022014957 | A1 | 13 January 2022 |
| | | | | EP | 3918830 | A1 | 08 December 2021 |
| | | | | WO | 2021057679 | A1 | 01 April 2021 |
| | | | | CN | 113596908 | A | 02 November 2021 |
| CN | 103107866 | A | 15 May 2013 | None | | | |
| US | 2021014711 | A1 | 14 January 2021 | EP | 3981091 | A1 | 13 April 2022 |
| | | | | WO | 2021007562 | A1 | 14 January 2021 |
| | | | | CN | 114080763 | A | 22 February 2022 |

Form PCT/ISA/210 (patent family annex) (July 2022)

**REFERENCES CITED IN THE DESCRIPTION**

**Patent documents cited in the description**

- CN 202210806549